# EUROPÄISCHE PATENTSCHRIFT

(11) **EP 0 739 967 B1**
(45) Veröffentlichungstag und Bekanntmachung des Hinweises auf die Patenterteilung: **24.11.1999**
(21) Anmeldenummer: 96105930.0
(22) Anmeldetag: 16.04.1996
(51) Int. Cl.: C09K 11/06

(54) **Fluoreszierende Materialien**
Fluorescent materials
Matériaux fluorescents

(30) Priorität: 28.04.1995 DE 19515755
(43) Veröffentlichungstag der Anmeldung: 30.10.1996
(73) Patentinhaber: FRAUNHOFER-GESELLSCHAFT ZUR FÖRDERUNG DER ANGEWANDTEN FORSCHUNG E.V., 80636 München (DE)
(72) Erfinder: Spanhel, Lubomir, Dr. rer. nat., 97070 Würzburg (DE); Wolter, Herbert, Dr. rer. nat., 97950 Grossrinderfeld (DE); Neumann, Gert, Dr. rer. nat., 97080 Würzburg (DE); Popall, Michael, Dr. rer. nat., 97072 Würzburg (DE); Schmidt, Thomas, Dipl.-Chem., 91443 Scheinfeld (DE)

(56) Entgegenhaltungen:
- EP-A- 0 612 772
- J. SOL-GEL SCI. TECHNOL. (1994), 2(1/2/3), 627-34 CODEN: JSGTEC;ISSN: 0928-0707, 1994, XP002009809 MATTHEWS, LOWELL R. ET AL: "Luminescence behavior of inorganic and metalorganic europium(III) dopants incorporated into silica and epoxy-diol ORMOSIL sol-gel hosts"
- JOURNAL OF NON-CRYSTALLINE SOLIDS, Bd. 178, 3.November 1994, Seiten 44-51, XP000483314 MATTHEWS L R ET AL: "CONCENTRATION EFFECTS ON THE LUMINESCENCE BEHAVIOR OF EUROPIUM (III) CHLORIDE- AND ORGANOEUROPIUM-DOPED SILICATE GELS"
- DATABASE INSPEC INSTITUTE OF ELECTRICAL ENGINEERS, STEVENAGE, GB Inspec No. 5087944, BESCHER E P ET AL: "Rare earth/organic dye nanocomposites by the sol-gel method" XP002009859 & MOLECULARLY DESIGNED ULTRAFINE/NANOSTRUCTURED MATERIALS SYMPOSIUM, MOLECULARLY DESIGNED ULTRAFINE/NANOSTRUCTURED MATERIALS SYMPOSIUM, SAN FRANCISCO, CA, USA, 4-8 APRIL 1994, 1994, PITTSBURGH, PA, USA, MATER. RES. SOC, USA, Seiten 135-139,

## Beschreibung

Die Erfindung betrifft fluoreszierende Materialien mit einer Matrix auf der Basis von Kieselsäure(hetero)polykondensaten und/oder organischen Polymeren, mit darin enthaltenen Pr³⁺-Ionen und mit gegebenenfalls weiteren Zusatzstoffen. Ferner betrifft die Erfindung die Herstellung dieser Materialien sowie deren Verwendung.

Fluoreszierende, Praseodym-haltige Materialien finden z.B. Anwendung in optischen Verstärkern und bestehen im wesentlichen aus einer Matrix mit darin eingelagerten Pr³⁺-Ionen. Als Matrixmaterialien werden über Schmelztechnik gefertigte ZBLAN-Gläser, gemischte Schwermetallhalogenidgläser oder Chalkogenidgläser verwendet. Zur Herstellung werden Verfahren der FHT-Technik, des Ionenaustausches bzw. der Sputtertechnik eingesetzt. Erste Ergebnisse zur Lichtverstärkung an fluoreszierenden Pr-haltigen ZBLAN-Glas-Wellenleitern liegen bereits vor. (F. Chenard, "New Applications abound for Rare-Earth-doped Fibers", May 1994 in Photonics Spectra; R. Reisfeld et al., Proc. 2-th Int. School of Spectroscopy of Transitions Elements, 1991, World Scientific Publishing, Singapore; Q. He, S. Lafreniere et al., SPIE Vol. 1794 "Integrated optical circuits II", 1992, 303.308.).

Nachteile dieser Materialien sind jedoch die geringe Löslichkeit der Pr³⁺-Ionen in der Matrix, sowie unerwünschtes Konzentrationsquenching durch benachbarte Pr³⁺-Ionen und strahlungslose Relaxation durch Elektron-Phonon-Kopplung. Dadurch wird die Quantenausbeute der Fluoreszenz und die Effizienz der Lichtverstärkung dieser Materialien stark reduziert. Ferner sind die Herstellungsverfahren aufwendig und kostenintensiv.

Aus der US 3,927,224 sind lumineszierende Materialien mit einer anorganischen, glasartigen Matrix bekannt, die über einen Sol-Gel-Prozeß gewonnen werden. Dazu werden Siliciumalkoxide und Metallalkoxide einer hydrolytischen Kondensation unterzogen, mit lumineszierenden Komponenten versetzt und so lange erhitzt, bis das System frei von organischen Bestandteilen ist. Die verbleibenden Oxide werden anschließend zu einem Glas geschmolzen. Auf diese Art und Weise können jedoch nur anorganische, oxidische und glasartige Materialien mit einem engen Eigenschaftsprofil gewonnen werden, deren Herstellung zudem hohe Temperaturen und damit hohe Energiekosten erfordert. Außerdem zeigen diese Systeme nur geringe Quantenausbeuten.

Aufgabe der vorliegenden Erfindung ist es deshalb, fluoreszierende, Praseodymhaltige Materialien bereit zu stellen, die über eine hohe Quantenausbeute verfügen, die eine hohe Konzentration an Pr³⁺-Ionen aufweisen und die trotz einer hohen Pr³⁺-lonen-Konzentration kein oder nur ein geringes Konzentrationsquenching zeigen. Ferner soll das Herstellungsverfahren einfach, kostengünstig und universell einsetzbar sein. Außerdem sollen die chemischen und physikalischen Eigenschaften der fluoreszierenden Materialien in weiten Bereichen variierbar sein und sie sollen den Erfordernissen des jeweiligen Anwendungsfalles angepaßt werden können. Ferner sollen die fluoreszierenden Materialien zu den unterschiedlichsten Formkörpern verarbeitet werden können, wie z.B. zu Beschichtungen, zu Fasern etc..

Gelöst wird diese Aufgabe durch Materialien, die eine Matrix auf der Basis von Kieselsäurepolykondensaten bzw. Kieselsäureheteropolykondensaten und/oder organischen Polmeren aufweisen, und die in der Matrix Pr³⁺-Ionen und gegebenenfalls weitere Zusatzstoffe enthalten. Die Pr³⁺-Ionen sind mit einer oder mehreren Verbindungen komplexiert, die über mindestens eine Elektronenpaar-Donorgruppe verfügen und die keine Sauerstoffatome ausweisen, und das molare Verhältnis von Pr³⁺-Ionen zu Komplexbildner liegt zwischen 1:4 und 1:50. Der Gehalt an Pr³⁺-Ionen liegt zwischen 1 und 50 Gew.-%.

Das Kieselsäure(hetero)polykondensat ist ein hydrolytisches Kondensat oder Vorkondensat einer oder mehrerer hydrolytisch kondensierbarer Verbindungen des Siliciums und gegebenenfalls anderer Elemente aus der Gruppe B, Al, Ge, P, As, Sb, Sn, Pb, der Übergangsmetalle, der Lanthaniden und der Actiniden, und/oder von den oben genannten Verbindungen abgeleiteten Vorkondensaten, wobei die (Vor)Kondensation gegebenenfalls in Anwesenheit eines Katalysators und/oder eines Lösungsmittels, durch Einwirkung von Wasser oder von Feuchtigkeit durchgeführt ist. 5 bis 100 Mol-% der hydrolytisch (vor)kondensierten Verbindungen, auf der Basis monomerer Verbindungen, sind abgeleitet von Silanen der allgemeinen Formel I,

SiRₐX_{b} (I)

in der die Reste R und X gleich oder verschieden sind und folgende Bedeutung haben:
- R =: Alkyl, Alkenyl, Aryl, Alkylaryl oder Arylalkyl, wobei diese Reste durch Sauerstoff- oder Schwefelatome oder -NH-Gruppen unterbrochen sein können und/oder Spiro-, Oxiran-, cyclische Anhydrid- oder Isocyanatgruppen enthalten können;
- X =: Wasserstoff, Halogen, Hydroxy, Alkoxy, Acyloxy, Alkylcarbonyl, Alkoxycarbonyl oder NR'₂, mit R' = Wasserstoff, Alkyl oder Aryl,
- a =: 1,2, oder 3,
- b =: 1,2, oder 3, mit a+b = 4.

Stellt die Matrix ein organisches Polymer dar, so kann diese, ohne Einschränkung der Allgemeinheit, z.B. ein Polyacrylnitril, ein Polyacrylat, ein Polymethacrylat, ein Polystyrol, ein Polypropylen oder ein Copolymeres derselben sein. Die Matrix umfaßt ferner amorphe lineare und vernetzte Polymere, die durch Polymerisation und/oder Polykondensation und/oder Polyaddition hergestellt werden. Beispielhaft sind hier Polymere auf Basis substituierter Ethylene zu nennen, wie etwa Styrol, Acrylate, Methylmethacrylate oder Vinylether, oder auch disubstituierte Ethylene, wie etwa Maleinsäure, deren Ester und Anhydride, Allylverbindungen, wie z.B. Diallylphthalat oder Triallylcyanurat, aber auch Polymere auf Basis von ungesättigten Verbindungen, wie z.B. Norbornen oder Cyclohexen, sowie Copolymere aus derartigen Verbindungen. Bei Polyadditionsprodukten sind solche auf der Basis von Epoxiden, wie z.B. Tris-(glycidyl)-isocyanurat oder Hexahydrophthalsäure oder aus verzweigtem Polypropylenoxid und Dicyclohexylmethandiisocyanat beispielhaft anzuführen.

In weiteren Ausführungsformen der erfindungsgemäßen, fluoreszierenden Materialien sind die Pr³⁺-Ionen an nanoskaligen Teilchen fixiert, deren Durchmesser bis zu 20 nm betragen. Der Anteil der nanoskaligen Teilchen in den erfindungsgemäßen Materialien liegt bevorzugt zwischen 0 und 40 Vol.-%. Sind die Pr³⁺-Ionen an nanoskaligen Teilchen fixiert, so liegt das Partikelverhältnis von nanoskaligen Teilchen zu Pr³⁺-Ionen bevorzugt zwischen 1:1 und 1:500, besonders bevorzugt zwischen zwischen 1:10 und 1:100.

Überraschenderweise wurde festgestellt, daß in der eben beschriebenen Matrix eingelagerte Pr³⁺-Ionen fluoreszieren, wenn diese mit einer oder mehreren organischen Verbindungen komplexiert sind, die über mindestens eine Elektronenpaar-Donorgruppe verfügen und keine Sauerstoffatome aufweisen. Sind die Pr³⁺-Ionen zusätzlich noch an nanoskaligen Teilchen fixiert, so wird die Fluoreszenz noch verstärkt. Dies ist vorallem deshalb überraschend und war nicht zu erwarten, weil in der eben beschriebenen Matrix eingelagerte Pr³⁺-Ionen keine Fluoreszenz zeigen, wenn sie alleine oder an nanoskaligen Teilchen fixiert vorliegen. Erst die Komplexierung mit den oben genannten Verbindungen führt in der beschriebenen Matrix zu einer Fluoreszenz der Pr³⁺-Ionen.

Ferner wurde überraschenderweise festgestellt, daß trotz der enorm hohen Konzentration an Pr³⁺-Ionen gegenüber dem Stand der Technik ein Konzentrationsquenching nicht oder nur geringfügig eintritt, so daß die erfindungsgemäßen Materialien hohe Fluoreszenzquantenausbeuten zeigen, die diejenigen des Standes der Technik weit übersteigen. Dies ist wahrscheinlich auf eine verbesserte homogene Verteilung der Pr³⁺-Ionen in der Matrix und damit auf eine weitestgehende Blockierung des Konzentrationsquenchings zurückzuführen. Vermutlich wirken die nanoskaligen Teilchen und die Komplexbildner als "Abstandhalter" zwischen den Pr³⁺-Ionen, so daß Aggregationen von Pr³⁺-Ionen verhindert werden und emitierte Fluoreszenzstrahlung nicht absorbiert werden kann.

Die Alkylreste in der allgemeinen Formel I sind z.B. geradkettige, verzweigte oder cyclische Reste mit z.B. 1 bis 20, insbesondere mit 1 bis 10 Kohlenstoffatomen und vorzugsweise niedere Alkylreste mit 1 bis 6, besonders bevorzugt mit 1 bis 4 Kohlenstoffatomen. Ohne Einschränkung der Allgemeinheit sind spezielle Beispiele Methyl, Ethyl, n-Propyl, i-Propyl, n-Butyl, i-Butyl, s-Butyl, t-Butyl, n-Pentyl, n-Hexyl, Cyclohexyl, 2-Ethylhexyl, Dodecyl und Octadecyl.

Die Alkenylreste in der allgemeinen Formel I sind z.B. geradkettige, verzweigte oder cyclische Reste mit z.B. 2 bis 20, bevorzugt mit 2 bis 10 Kohlenstoffatomen und vorzugsweise niedere Alkenylreste mit 2 bis 6 Kohlenstoffatomen, wie z.B. Vinyl, Allyl und 2-Butenyl.

Bevorzugte Arylreste in der allgemeinen Formel I sind Phenyl, Biphenyl und Naphthyl.

Die Alkoxy-, Acyloxy-, Alkylamino-, Dialkylamino-, Alkylcarbonyl-, Alkoxycarbonyl-, Arylalkyl-, Alkylaryl-, Alkylen- und Alkylenarylenreste in der allgemeinen Formel I leiten sich vorzugsweise von den oben genannten Alkyl- und Arylresten ab. Spezielle Beispiele sind Methoxy, Ethoxy, n- und i-Propoxy, n-, i-, s- und t-Butoxy, Monomethylamino, Monoethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Monoalkylamino, Dialkylamino, Trialkylammonium, Amido, Hydroxy, Formyl, Carboxy, Mercapto, Cyano, Isocyanato, Nitro, Epoxy, SO₃H oder PO₄H₂.

Unter den Halogenen sind Fluor, Chlor und Brom und insbesondere Chlor bevorzugt. Für a ≥ 2 bzw. b ≥ 2 können die Reste X und R jeweils die selbe oder eine unterschiedliche Bedeutung haben.

Derartige Silane sind z.B. in der DE 3407087 A1 beschrieben oder können, wie in "Chemie und Technologie der Silicone" (Walter Noll, Verlag Chemie, Weinheim/ Bergstraße, 2. Auflage, 1968) dargelegt, gefertigt werden.

Konkrete Beispiele für Silane der allgemeinen Formel I sind:
Glycidylpropyltriethoxysilan, Methacrylpropyltriethoxysilan, (C₆H₅)₂Si(OH)₂, CH₃-Si-Cl₃, CH₃-Si-(OC₂H₅)₃, C₂H₅-Si-Cl₃, C₂H₅-Si-(OC₂H₅)₃, CH₂=CH-Si-(OC₂H₅)₃, CH₂=CH-Si-(OC₂H₄OCH₃)₃, (CH₃)₂-Si-Cl₂, (CH₃)₂-Si-(OC₂H₅)₂, (C₂H₅)₃-Si-Cl, CH₂=CH-Si-(OOCCH₃)₃, (C₂H₅)₂-Si-(OC₂H₅)₂, (CH₃)₂(CH₂=CH)-Si-Cl₂, (CH₃)₃-Si-Cl, (t-C₄H₉)(CH₃)₂-Si-Cl, (CH₃O)₃-Si-C₃H₆-NH-C₂H₄-NH-C₂H₄-NH₂, (CH₃O)₃-Si-C₃H₆-SH, (CH₃O)₃-Si-C₃H₆-NH-C₂H₄-NH₂, (CH₃O)₃-Si-C₃H₆-Cl, (CH₃)₂(CH₂=CH-CH₂)-Si-Cl, (CH₃O)₃-Si-C₃H₆-O-C(O)-C(CH₃)=CH₂, (C₂H₅O)₃-Si-C₃H₆-NH₂, (C₂H₅O)₃-Si-C₃H₆-CN,

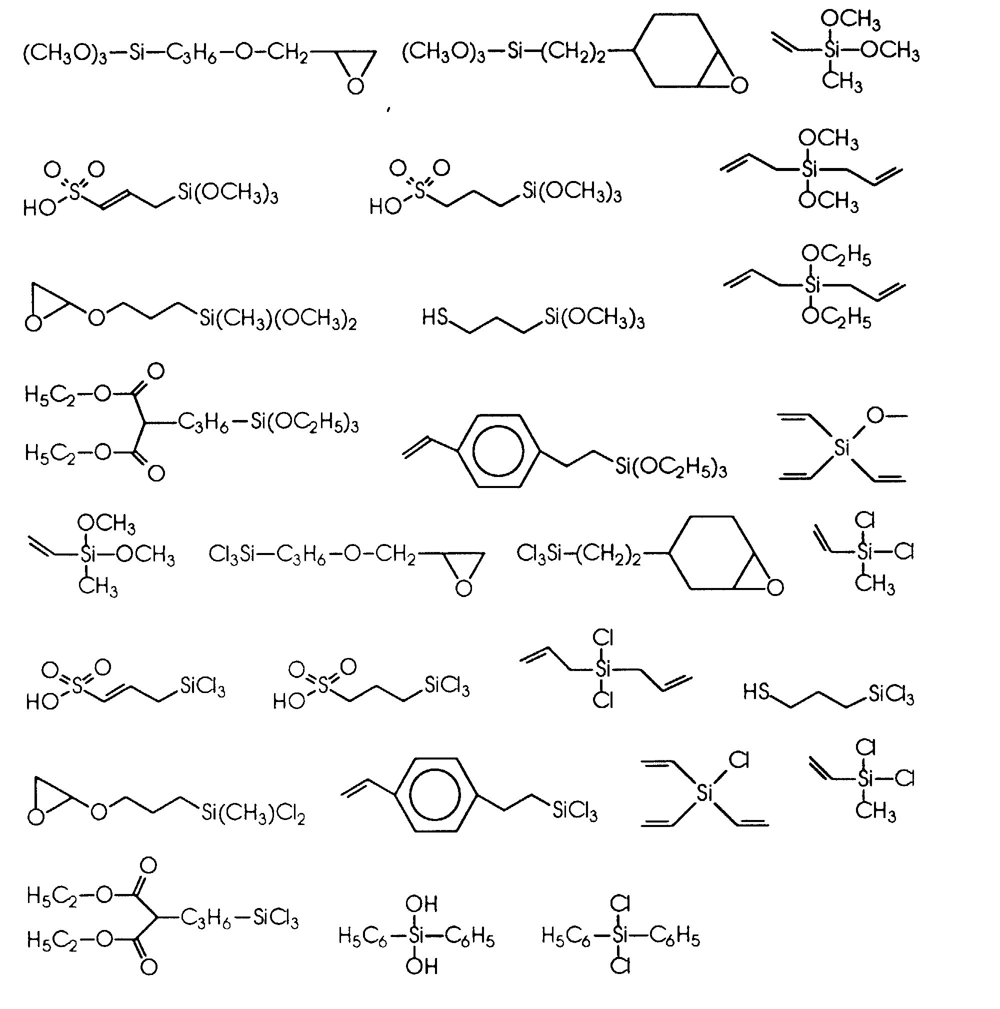

Der Gehalt an Pr³⁺-Ionen in den erfindungsgemäßen Materialien kann in weiten Bereichen variiert werden und liegt zwischen 1 und 50 Gew.-%, bevorzugt zwischen 5 und 25 Gew.-%. Überraschenderweise wurde festgestellt, daß bei diesen hohen Konzentrationen an Pr³⁺-Ionen kein oder nur ein geringfügiges Konzentrationsquenching auftritt, so daß die erfindungsgemäßen Materialien über ausgezeichnete Fluoreszenzquantenausbeuten verfügen.

Die nanoskaligen Teilchen weisen Partikelgrößen zwischen 2 und 20 nm auf, bevorzugt zwischen 5 und 10 nm, und sie sind bevorzugt Sulfide und/oder Selenide und/oder Telluride und/oder Arsenide und/oder Antimonide der Metalle oder Übergangsmetalle. Ganz besonders bevorzugt sind Sulfide und/oder Selenide und/oder Telluride des Wolfram. Ohne Einschränkung der Allgemeinheit bestehen die nanoskaligen Teilchen aus ZnS, ZnSe oder SnS2. Bezüglich deren Herstellung und bezüglich näherer Informationen wird auf die DE 4133621 A1 verwiesen.

Die Pr³⁺-Ionen sind mit organischen Verbindungen komplexiert, die über mindestens eine Elektronenpaar-Donorgruppe verfügen, aber über keinen Sauerstoff. Geeignete Komplexbildner sind z.B. Stickstoff-haltige Verbindungen, wie etwa aliphatische, aromatische oder heterocyclische Amine, Diamine, Pyridinderivate, Dipyridyle, Porphyrine, Hydrazinderivate, Umsetzungsprodukte von Ammoniak oder Aminen mit Aldehyden oder Ketonen, Aminoderivate der Thiokohlensäure oder Nitrile. Ohne Einschränkung der Allgemeinheit sind konkrete Beispiele für derartige Komplexbildner Dimethylaminobutan, 2-Dimethylaminochinolin, Dimethylanilin, 5-Amino-1.2.4-thiadiazol, 3-Amino-1.2.4-triazol, 5-Dimethylaminopyrazol, Piperazin, Melamin, Hexamethylmelamin, N,N,N',N'-Tetramethyldiaminobutan, 2.4.6-Trimehyl-s-triazin, Isobutyrcyclohexylimin, Hydrobenzamid, Dipropioazin, 2.4-Dimethyl-3.4.-diazahexadien-2.4, Picolin, Chinolin, 2.2'-Dipyridyl, 3.3'-Dipyridyl, Thiosemicarbazid, Bisthioharnstoff, Thiocarbohydrazid, Benzonitril, Acetonitril, Dicyandiamid oder

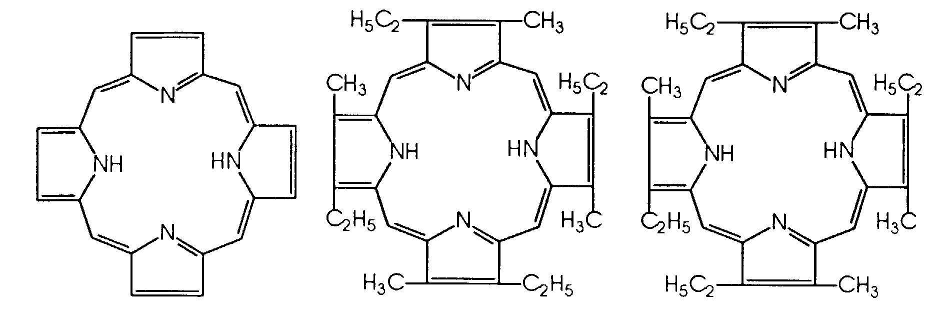

Ferner sind schwefelhaltige Verbindungen geeignet, wie z.B.Thiocyanate oder Isothiocyanate, wie z.B. CH₂=CH-CH₂-S-C≡N oder CH₂=CH-CH₂-N=C=S, Polysulfide, Dithiolate, Mercaptane, Thioether oder Thiocarbonate. Konkrete Beispiele hierfür sind Thiophenol, Diphenyldisulfid, Bis(4-vinylbenzyl)disulfan, Thiophen, Dihydrothiophen, Tetrahydrothiophen, Diethyltrithiocarbonat, Poly(1.6-hexylensulfid) oder Polymere aus 3-Vinylthiophenol oder 4-Vinylthiophenol.

Außerdem kommen noch Phosphane, wie z.B. Triphenylphosphan, in Frage.

Ferner sind als Komplexbildner Silane der allgemeinen Formel V bevorzugt,

SiRₐL_{c}X_{b} (V)

in der die Reste R, L und X gleich oder verschieden sind und folgende Bedeutung haben:
- R =: Alkyl, Alkenyl, Aryl, Alkylaryl oder Arylalkyl, wobei diese Reste durch Schwefelatome oder -NH-Gruppen unterbrochen sein können
- L =: Alkyl, Alkenyl, Aryl, Alkylaryl oder Arylalkyl mit einer oder mehreren Phosphan-, Mercapto- oder primären und/oder sekundären Aminogruppen
- X =: Wasserstoff, Halogen, Hydroxy, Alkoxy, Acyloxy, Alkylcarbonyl, Alkoxycarbonyl oder NR'₂, mit R' = Wasserstoff, Alkyl oder Aryl,
- a =: 0, 1, 2, oder 3,
- b =: 0,1, 2, oder 3,
- c =: 1, 2, 3 oder 4, mit a+b+c = 4;

Die Alkylreste sind z.B. geradkettige, verzweigte oder cyclische Reste mit z.B. 1 bis 20, insbesondere mit 1 bis 10 Kohlenstoffatomen und vorzugsweise niedere Alkylreste mit 1 bis 6, besonders bevorzugt mit 1 bis 4 Kohlenstoffatomen. Ohne Einschränkung der Allgemeinheit sind spezielle Beispiele Methyl, Ethyl, n-Propyl, i-Propyl, n-Butyl, i-Butyl, s-Butyl, t-Butyl, n-Pentyl, n-Hexyl, Cyclohexyl, 2-Ethylhexyl, Dodecyl und Octadecyl.

Die Alkenylreste sind z.B. geradkettige, verzweigte oder cyclische Reste mit z.B. 2 bis 20, bevorzugt mit 2 bis 10 Kohlenstoffatomen und vorzugsweise niedere Alkenylreste mit 2 bis 6 Kohlenstoffatomen, wie z.B. Vinyl, Allyl und 2-Butenyl.

Bevorzugte Arylreste sind Phenyl, Biphenyl und Naphthyl.

Die Alkoxy-, Acyloxy-, Alkylamino-, Dialkylamino-, Alkylcarbonyl-, Alkoxycarbonyl-, Arylalkyl-, Alkylaryl-, Alkylen- und Alkylenarylenreste leiten sich vorzugsweise von den oben genannten Alkyl- und Arylresten ab. Spezielle Beispiele sind Methoxy, Ethoxy, n- und i-Propoxy, n-, i-, s- und t-Butoxy, Monomethylamino, Monoethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Monoalkylamino, Dialkylamino, Trialkylammonium, Amido, Hydroxy, Formyl, Carboxy, Mercapto, Cyano, Isocyanato, Nitro, Epoxy, SO₃H oder PO₄H₂.

Unter den Halogenen sind Fluor, Chlor und Brom und insbesondere Chlor bevorzugt.

Für a ≥ 2 bzw. b ≥ 2 bzw. c ≥ 2 können die Reste X, L und R jeweils die selbe oder eine unterschiedliche Bedeutung haben.

Ohne Einschränkung der Allgemeinheit sind konkrete Beispiele für Silane der allgemeinen Formel V:

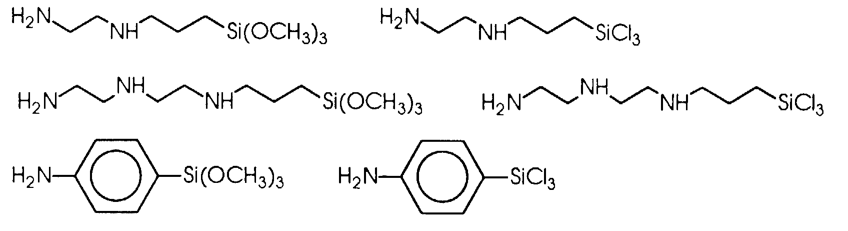

Die erfindungsgemäßen Materialien stellen fluoreszierende anorganisch-organische Hybridkomposite mit Praseodymkonzentrationen von bis zu 50 Gew.-% dar, wobei die Pr³⁺-Ionen in eine organisch modifizierte Silicatmatrix kontrolliert eingebaut sind. Die erfindungsgemäßen Materialien sind optisch transparent und zeigen NlR-Fluoreszenzbanden mit Wellenlängenmaxima bei ca. 1480, 1350, 1020 und 925 nm.

Die Matrix der erfindungsgemäßen Materialien stellt, im Falle der Kieselsäure(hetero) polykondensate, ein organisch-anorganisch vernetztes Hybridmaterial dar, dessen Hydrophobie bzw. Hydrophilie durch die organischen bzw. anorganischen Bestandteile gezielt einstellbar und kontrollierbar ist. Ferner können die Wellenleitereigenschaften des erfindungsgemäßen Materials sowie seine Mikrostrukturierung hinsichtlich der Fertigstellung von Testkomponenten für planare Lichtverstärker gezielt kontrolliert werden.

Diese erfindungsgemäßen Materialien werden naßchemisch über eine Sol-Gel-Technik, bevorzugt bei Temperaturen unterhalb von 100 °C, hergestellt. Das Herstellungsverfahren beinhaltet zwei unabhängig von einander durchführbare Verfahrensschritte zur Herstellung der Vorstufen, nämlich die Herstellung einer Matrixvorstufe und die Herstellung der mit einer organischen Verbindung komplexierten Pr³⁺-Ionen, die gegebenenfalls zusätzlich an nanoskaligen Teilchen fixiert sind. Für den Fall einer rein organischen Matrix können der Zubereitung der komplexierten Pr³⁺-Ionen entsprechende Monomere bzw. Prepolymere zugefügt werden, die beim bzw. nach dem Formgebungsprozeß reagieren. Anschließend werden die beiden Vorstufen kontrolliert physikalisch miteinander vermischt, das resultierende Sol gegebenenfalls vom Lösungsmittel befreit und gegebenenfalls mit weiteren Zusatzstoffen versehen. Die noch flüssige Solphase wird einem Beschichtungs- oder Formgebungsprozeß unterworfen. Darauf erfolgt gegebenenfalls eine vollständige Kondensation und/oder eine thermisch oder photochemisch induzierte Härtung der nassen Gelfilme oder -körper.

Die Matrixvorstufe stellt ein Kieselsäurepolykondensat oder ein Kieselsäureheteropolykondensat dar und entsteht durch Hydrolyse und Kondensation bzw. durch Teil- oder Vorkondensation eines oder mehrerer organisch funktionalisierter Siliciumalkoxide und gegebenenfalls durch Hydrolyse und Kondensation bzw. durch Teil- oder Vorkondensation anderer Elemente aus der Gruppe B, Al, Ge, P, As, Sb, Sn, Pb, der Übergangsmetalle, der Lanthaniden und der Actiniden, und/oder von den oben genannten Verbindungen abgeleiteten Vorkondensaten. Die hydrolytische (Vor-, Teil-) Kondensation wird gegebenenfalls in Anwesenheit eines Katalysators und/oder eines Lösungsmittels, durch Einwirkung von Wasser oder von Feuchtigkeit durchgeführt und gegebenenfalls unter Zugabe weiterer Zusatzstoffe. Auf der Basis monomerer Verbindungen sind 5 bis 100 Mol.-% der hydrolytisch (vor)kondensierten Verbindungen ausgewählt aus Silanen der allgemeinen Formel I.

SiRₐX_{b} (I)

Die Reste und Indices der allgemeinen Formel I sowie spezielle Beispiele wurden bereits bei der Beschreibung der erfindungsgemäßen Materialien näher erläutert

Bevorzugt ist es, wenn mindestens 10 Mol-%, insbesondere mindestens 80 Mol-% und speziell mindestens 90 Mol-%, auf der Basis monomerer Verbindungen, der zu Herstellung der Kieselsäure(hetero)polykondensate herangezogenen Ausgangsmaterialien Siliciumverbindungen sind. Den Kieselsäure(hetero)polykondensaten liegen mindestens 5 Mol-%, z.B. 25 bis 100 Mol-%, insbesondere 50 bis 100 Mol-% und speziell 75 bis 100 Mol-%, jeweils auf der Basis monomerer Verbindungen, an einem oder mehreren der Silane der allgemeinen Formel I zugrunde liegen.

Die Silane der allgemeinen Formel I sind im basischen oder sauren Milieu hydrolysier- und kondensierbar. Dadurch ist es möglich, die Silane der allgemeinen Formel I durch hydrolytische Kondensation in ein anorganisch-organisches Netzwerk einzubauen. Die Silane der allgemeinen Formel I enthalten hydrolysierbare Gruppen X, z.B. Alkoxy-Gruppen, so daß damit ein anorganisches Netzwerk (Si-O-Si-Einheiten) aufgebaut werden kann. Sind im Rest R polymerisierbare oder polyaddierbare Gruppen enthalten, so führt deren Polymerisation bzw. Polyaddition zum Aufbau eines organischen Netzwerkes.

Zum Aufbau des anorganischen Netzwerkes werden die Silane der allgemeinen Formel I, gegebenenfalls unter Zusatz anderer cokondensierbarer Komponenten hydrolysiert und polykondensiert. Die Polykondensation erfolgt vorzugsweise nach dem Sol-Gel-Verfahren, wie es z.B. in den DE-A1 2758414, 2758415, 3011761, 3826715 und 3835968 beschrieben ist.

Zum Aufbau des organischen Netzwerkes werden die Silane der allgemeinen Formel I, gegebenenfalls unter Zusatz anderer copolymerisierbarer bzw. polyaddierbarer Komponenten polymerisiert bzw. polyaddiert. Die Polymerisation bzw. Polyaddition kann z.B. thermisch, redoxinduziert, kovalent-nucleophil und/oder photochemisch unter Einsatz von Methoden erfolgen, wie sie z.B. in den DE-A1 3143820, 3826715 und 3835968 beschrieben sind.

Bei Anwesenheit von zwei oder mehr polymerisierbaren oder polyaddierbaren Gruppen im Rest R ist die Ausbildung eines dreidimensionalen, organischen Netzwerkes möglich. Über die Kettenlänge des Restes R und über die Anwesenheit weiterer funktioneller Gruppen in dieser Kette können die mechanischen Eigenschaften (z.B. Flexibilität) und die physikalisch-chemischen Eigenschaften (Adsorption, Brechzahl, Haftung etc.) der Poly(hetero)kondensate bzw. der Matrix bzw. der erfindungsgemäßen Materialien beeinflußt werden. Durch die Ausbildung eines anorganischen Netzwerkes können je nach Art und Anzahl der hydrolysierbaren Gruppen (z.B. Alkoxy-Gruppen) silicon- oder glasartige Eigenschaften der Poly(hetero)kondensate bzw. der Matrix bzw. der erfindungsgemäßen Materialien eingestellt werden.

Unter den von Silanen der allgemeinen Formel I verschiedenen, hydrolytisch kondensierbaren Siliciumverbindungen, die gegebenenfalls eingesetzt werden können, sind solche der allgemeinen Formel II besonders bevorzugt,

Rₐ(R"Z')_{b}SiX_{4-(a+b)} (II)

in der die Reste und Indices folgende Bedeutung haben:
- R =: Alkyl, Alkenyl, Aryl, Alkylaryl oder Arylalkyl,
- R" =: Alkylen oder Alkenylen, wobei diese Reste durch Sauerstoff- oder Schwefelatome oder -NH-Gruppen unterbrochen sein können,
- X =: Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
- Z' =: Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinylgruppe,
- a =: 0, 1, 2, oder 3,
- b =: 0,1,2,oder3,
mit a+b = 1,2 oder 3.

Für a ≥ 2, b ≥ 2 oder 4-(a+b) ≥ 2 können die Reste R, X und R"Z' die gleiche oder verschiedene Bedeutung haben.

Die Alkylreste sind z.B. geradkettige, verzweigte oder cyclische Reste mit z.B. 1 bis 20, insbesondere mit 1 bis 10 Kohlenstoffatomen und vorzugsweise niedere Alkylreste mit 1 bis 6, besonders bevorzugt mit 1 bis 4 Kohlenstoffatomen. Ohne Einschränkung der Allgemeinheit sind spezielle Beispiele Methyl, Ethyl, n-Propyl, i-Propyl, n-Butyl, i-Butyl, s-Butyl, t-Butyl, n-Pentyl, n-Hexyl, Cyclohexyl, 2-Ethylhexyl, Dodecyl und Octadecyl.

Die Alkenylreste sind z.B. geradkettige, verzweigte oder cyclische Reste mit z.B. 2 bis 20, bevorzugt mit 2 bis 10 Kohlenstoffatomen und vorzugsweise niedere Alkenylreste mit 2 bis 6 Kohlenstoffatomen, wie z.B. Vinyl, Allyl und 2-Butenyl.

Bevorzugte Arylreste sind Phenyl, Biphenyl und Naphthyl.

Die Alkoxy-, Acyloxy-, Alkylamino-, Dialkylamino-, Alkylcarbonyl-, Alkoxycarbonyl-, Arylalkyl-, Alkylaryl-, Alkylen- und Alkylenarylenreste leiten sich vorzugsweise von den oben genannten Alkyl- und Arylresten ab. Spezielle Beispiele sind Methoxy, Ethoxy, n- und i-Propoxy, n-, i-, s- und t-Butoxy, Monomethylamino, Monoethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Monoalkylamino, Dialkylamino, Trialkylammonium, Amido, Hydroxy, Formyl, Carboxy, Mercapto, Cyano, Isocyanato, Nitro, Epoxy, SO₃H oder PO₄H₂.

Unter den Halogenen sind Fluor, Chlor und Brom und insbesondere Chlor bevorzugt.

Unter den von Silanen der allgemeinen Formel I verschiedenen, hydrolytisch kondensierbaren Siliciumverbindungen, die gegebenenfalls eingesetzt werden können, sind solche der allgemeinen Formel III ebenfalls besonders bevorzugt,

{XₙRₖSi[(R²A)ₗ]₄₋₍ₙ₊ₖ₎}ₓB (III)

in der die Reste und Indices folgende Bedeutung haben:
- A =: O, S, PR', POR', NHC(O)O oder NHC(O)NR',
mit R' = Wasserstoff, Alkyl oder Aryl,
- B =: geradkettiger oder verzweigter organischer Rest, der sich von einer Verbindung B' mit mindestens einer (für l = 1 und A = NHC(O)O oder NHC(O)NR') bzw. mindestens zwei C=C-Doppelbindungen und 5 bis 50 Kohlenstoffatomen ableitet,
mit R'= Wasserstoff, Alkyl oder Aryl,
- R =: Alkyl, Alkenyl, Aryl, Alkylaryl oder Arylalkyl,
- R² =: Alkylen, Arylen oder Alkylenarylen,
- X =: Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
- n =: 1, 2 oder 3,
- k =: 0, 1 oder 2,
- l =: 0 oder 1,
- x =: eine ganze Zahl, deren Maximalwert der Anzahl von Doppelbindungen in der Verbindung B' minus 1 entspricht, bzw. gleich der Anzahl von Doppelbindungen in der Verbindung B' ist, wenn l = 1 und A für NHC(O)O oder NHC(O)NR steht.

Solche Silane sind in der DE 40 11 044 und in der EP 91 105 355 ausführlichst beschrieben.

Die Alkylreste sind z.B. geradkettige, verzweigte oder cyclische Reste mit z.B. 1 bis 20, vorzugsweise mit 1 bis 10 Kohlenstoffatomen, und besonders bevorzugt sind niedere Alkylreste mit 1 bis 6 Kohlenstoffatomen. Spezielle Beispiele sind Methyl, Ethyl, n-Propyl, i-Propyl, n-Butyl, s-Butyl, t-Butyl, i-Butyl, n-Pentyl, n-Hexyl, Cyclohexyl, 2-Ethylhexyl, Dodecyl und Octadecyl.

Die Alkenylreste sind z.B. geradkettige, verzweigte oder cyclische Reste mit z.B. 2 bis 20, vorzugsweise mit 2 bis 10 Kohlenstoffatomen, und besonders bevorzugt sind niedere Alkenylreste mit 2 bis 6 Kohlenstoffatomen, wie z.B. Vinyl, Allyl oder 2-Butenyl.

Bevorzugte Arylreste sind Phenyl, Biphenyl und Naphthyl.

Die Alkoxy-, Acyloxy-, Alkylcarbonyl-, Alkoxycarbonyl- und Aminoreste leiten sich vorzugsweise von den oben genannten Alkyl- und Arylresten ab. Spezielle Beispiele sind Methoxy, Ethoxy, n- und i-Propoxy, n-, i-, s- und t-Butoxy, Methylamino, Ethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Alkylamino, Dialkylamino, Trialkylammonium, Amido, Hydroxy, Formyl, Carboxy, Mercapto, Cyano, Nitro, Epoxy, SO₃H und PO₄H₂.

Unter den Halogenen sind Fluor, Chlor und Brom bevorzugt.

Der Rest B leitet sich von einer substituierten oder unsubstituierten Verbindung B' mit mindestens zwei C=C-Doppelbindungen ab, z.B. Vinyl-, Allyl-, Acryl- und/oder Methacrylatgruppen, und 5 bis 50, vorzugsweise 6 bis 30 Kohlenstoffatomen. Vorzugsweise leitet sich B ab, von einer substituierten oder unsubstituierten Verbindung B' mit zwei oder mehreren Acrylat- oder Methacrylatgruppen. Falls die Verbindung B' substituiert ist, können die Substituenten unter den oben genannten Substituenten ausgewählt sein.

Unter den von Silanen der allgemeinen Formel I verschiedenen, hydrolytisch kondensierbaren Siliciumverbindungen, die gegebenenfalls eingesetzt werden können, sind solche der allgemeinen Formel IV ebenfalls besonders bevorzugt,

Yₙ Si Xₘ R₄₋₍ₙ₊ₘ₎ (IV)

in der die Reste X, Y und R gleich oder verschieden sind und folgende Bedeutung haben:
- R =: Alkyl, Alkenyl, Aryl, Alkylaryl oder Arylalkyl,
- X =: Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
- Y =: ein Substituent, der einen substituierten oder unsubstituierten 1,4,6-Trioxaspiro-[4,4]-nonan-Rest enthält,
- n =: 1, 2 oder 3,
- m =: 1, 2 oder 3, mit n+m ≤ 4.

Diese Spiro-Silane sind über die Reste X hydrolysierbar und über die Reste Y polymerisierbar und sie sind in der DE 4125201 C1 ausführlichst beschrieben.

Die Alkylreste sind z.B. geradkettige, verzweigte oder cyclische Reste mit z.B. 1 bis 20, vorzugsweise mit 1 bis 10 Kohlenstoffatomen, und besonders bevorzugt sind niedere Alkylreste mit 1 bis 6 Kohlenstoffatomen. Spezielle Beispiele sind Methyl, Ethyl, n-Propyl, i-Propyl, n-Butyl, s-Butyl, t-Butyl, i-Butyl, n-Pentyl, n-Hexyl, Cyclohexyl, 2-Ethylhexyl, Dodecyl und Octadecyl.

Die Alkenylreste sind z.B. geradkettige, verzweigte oder cyclische Reste mit z.B. 2 bis 20, vorzugsweise mit 2 bis 10 Kohlenstoffatomen, und besonders bevorzugt sind niedere Alkenylreste mit 2 bis 6 Kohlenstoffatomen, wie z.B. Vinyl, Allyl oder 2-Butenyl.

Bevorzugte Arylreste sind Phenyl, Biphenyl und Naphthyl.

Die Alkoxy-, Acyloxy-, Alkylcarbonyl-, Alkoxycarbonyl- und Aminoreste leiten sich vorzugsweise von den oben genannten Alkyl- und Arylresten ab. Spezielle Beispiele sind Methoxy, Ethoxy, n- und i-Propoxy, n-, i-, s- und t-Butoxy, Methylamino, Ethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Alkylamino, Dialkylamino, Trialkylammonium, Amido, Hydroxy, Formyl, Carboxy, Mercapto, Cyano, Nitro, Epoxy, SO₃H und PO₄H₂.

Unter den Halogenen sind Fluor, Chlor und Brom bevorzugt.

Unter den gegebenenfalls eingesetzten hydrolysierbaren Aluminiumverbindungen sind diejenigen besonders bevorzugt, die die allgemeine Formel AlR°₃ aufweisen, in der die Reste R°, die gleich oder verschieden sein können, ausgewählt sind aus Halogen, Alkoxy, Alkoxycarbonyl und Hydroxy. Hinsichtlich der näheren (bevorzugten) Definitionen dieser Reste kann auf die Ausführungen im Zusammenhang mit den geeigneten hydrolysierbaren Siliciumverbindungen verwiesen werden. Die soeben genannten Gruppen können auch ganz oder teilweise durch Chelatliganden (z.B. Acetylaceton oder Acetessigsäureester, Essigsäure) ersetzt sein.

Besonders bevorzugte Aluminiumverbindungen sind Aluminiumalkoxide und -halogenide. In diesem Zusammenhang können als konkrete Beispiele genannt werden
Al(OCH₃)₃, Al(OC₂H₅)₃, Al(O-n-C₃H₇)₃, Al(O-i-C₃H₇)₃, Al(OC₄H₉)₃, Al(O-i-C₄H₉)₃, Al(O-s-C₄H₉)₃, AlCl₃, AlCl(OH)₂.

Bei Raumtemperatur flüssige Verbindungen, wie z.B. Aluminium-sek-butylat und Aluminium-isopropylat, werden besonders bevorzugt.

Geeignete hydrolysierbare Titan- oder Zirkoniumverbindungen, die gegebenenfalls eingesetzt werden können, sind solche der allgemeinen Formel MX_{y}R_{z}, in der M Ti oder Zr bedeutet, y eine ganze Zahl von 1 bis 4 ist, insbesondere 2 bis 4, z für 0, 1, 2 oder 3 steht, vorzugsweise für 0, 1 oder 2, und X und R wie im Falle der allgemeinen Formel 1 definiert sind. Dies gilt auch für die bevorzugten Bedeutungen. Besonders bevorzugt handelt es sich bei den Verbindungen um solche, in denen y gleich 4 ist.

Wie im Falle der obigen Al-Verbindungen können auch komplexierte Ti- oder Zr-Verbindungen eingesetzt werden. Zusätzliche bevorzugte Komplexbildner sind hier Acrylsäure und Methacrylsäure, wobei Silane, die Acryl- bzw. Methacryl-Gruppen aufweisen, ebenfalls zur Komplexierung verwendet werden können. In diesem Fall besteht der große Vorteil darin, daß zur Komplexierung von Ti- und/oder Zr-Verbindungen keine zusätzlichen Komplexierungsmittel eingesetzt werden müssen.

Konkrete Beispiele für einsetzbare Zr- und Ti-Verbindungen sind die folgenden:
TiCl₄, Ti(OC₂H₅)₄, Ti(OC₃H₇)₄, Ti(O-i-C₃H₇)₄, Ti(OC₄H₉)₄, Ti(2-ethylhexoxy)₄, ZrCl₄, Zr(OC₂H₅)₄, Zr(OC₃H₇)₄, Zr(O-i-C₃H₇)₄, Zr(OC₄H₉)₄, Zr(2-ethylhexoxy)₄, ZrOCl₂

Weitere hydrolysierbare Verbindungen, die zur Herstellung der Polyheterokondensate eingesetzt werden können, sind z.B. Bortrihalogenide und Borsäureester, wie z.B. BCl₃, B(OCH₃)₃ und B(OC₂H₅)₃, Zinntetrahalogenide und Zinntetraalkoxide, wie z.B. SnCl₄ und Sn(OCH₃)₄, und Vanadylverbindungen, wie z.B. VOCl₃ und VO(OCH₃)₃.

Wie bereits erwähnt, kann die Herstellung der Poly(hetero)kondensate in auf diesem Gebiet üblicher Art und Weise erfolgen. Werden praktisch ausschließlich Siliciumverbindungen eingesetzt, kann die hydrolytische Kondensation in den meisten Fällen dadurch erfolgen, daß man den zu hydrolysierenden Siliciumverbindungen, die entweder als solche oder gelöst in einem geeigneten Lösungsmittel vorliegen, das erforderliche Wasser bei Raumtemperatur oder unter leichter Kühlung direkt zugibt (vorzugsweise unter Rühren und in Anwesenheit eines Hydrolyse- und Kondensationskatalysators) und die resultierende Mischung daraufhin einige Zeit (ein bis mehrere Stunden) rührt.

Bei Anwesenheit reaktiver Verbindungen von Al, Ti oder Zr empfiehlt sich in der Regel eine stufenweise Zugabe des Wassers. Unabhängig von der Reaktivität der anwesenden Verbindungen erfolgt die Hydrolyse in der Regel bei Temperaturen zwischen -20 und 130 °C, vorzugsweise zwischen 0 und 30 °C bzw. dem Siedepunkt des gegebenenfalls eingesetzten Lösungsmittels. Wie bereits angedeutet, hängt die beste Art und Weise der Zugabe von Wasser vor allem von der Reaktivität der eingesetzten Ausgangsverbindungen ab. So kann man z.B. die gelösten Ausgangsverbindungen langsam zu einem Überschuß an Wasser tropfen oder man gibt Wasser in einer Portion oder portionsweise den gegebenenfalls gelösten Ausgangsverbindungen zu. Es kann auch nützlich sein, das Wasser nicht als solches zuzugeben, sondern mit Hilfe von wasserhaltigen organischen oder anorganischen Systemen in das Reaktionssystem einzutragen. Als besonders geeignet hat sich in vielen Fällen die Eintragung der Wassermenge in das Reaktionsgemisch mit Hilfe von feuchtigkeitsbeladenen Adsorbentien, z.B. von Molekularsieben, und von wasserhaltigen, organischen Lösungsmitteln, z.B. von 80 %-igem Ethanol, erwiesen. Die Wasserzugabe kann aber auch über eine chemische Reaktion erfolgen, bei der Wasser im Laufe der Reaktion freigesetzt wird. Beispiele hierfür sind Veresterungen.

Wenn ein Lösungsmittel verwendet wird, kommen neben den niederen aliphatischen Alkoholen (z.B. Ethanol oder i-Propanol) auch Ketone, vorzugsweise niedere Dialkylketone, wie Aceton oder Methylisobutylketon, Ether, vorzugsweise niedere Dialkylether wie Diethylether oder Dibutylether, THF, Amide, Ester, insbesondere Essigsäureethylester, Dimethylformamid, Amine, insbesondere Triethylamin, und deren Gemische in Frage.

Werden Spiro-Silane zur Herstellung der Poly(hetero)kondensate eingesetzt, so wird die Hydrolyse bevorzugt in einem bzgl. der Spiro-Silane basischen Milieu durchgeführt. Dies wird entweder durch ein basisches Lösungsmittel, wie z.B. durch Triethylamin, erzeugt, oder durch Zugabe von basischen Hydrolyse- und Kondensationskatalysatoren, wie z.B. von NH₃, NaOH, KOH, Methylimidazol, etc.

Die Ausgangsverbindungen müssen nicht notwendigerweise bereits alle zu Beginn der Hydrolyse (Polykondensation) vorhanden sein, sondern in bestimmten Fällen kann es sich sogar als vorteilhaft erweisen, wenn nur ein Teil dieser Verbindungen zunächst mit Wasser in Kontakt gebracht wird und später die restlichen Verbindungen zugegeben werden.

Um insbesondere bei Verwendung von von Silicium-Verbindungen verschiedenen hydrolysierbaren Verbindungen Ausfällungen während der Hydrolyse und der Polykondensation so weit wie möglich zu vermeiden, kann die Wasserzugabe in mehreren Stufen, z.B. in drei Stufen, durchgeführt werden. Dabei kann in der ersten Stufe z.B. ein Zehntel bis ein Zwanzigstel der zur Hydrolyse benötigten Wassermenge zugegeben werden. Nach kurzem Rühren kann die Zugabe von einem Fünftel bis zu einem Zehntel der erforderlichen Wassermenge erfolgen und nach weiterem kurzen Rühren kann schließlich der Rest zugegeben werden.

Die Kondensationszeit richtet sich nach den jeweiligen Ausgangskomponenten und deren Mengenanteilen, dem gegebenenfalls verwendeten Katalysator, der Reaktionstemperatur, etc. Im allgemeinen erfolgt die Polykondensation bei Normaldruck, sie kann jedoch auch bei erhöhtem oder bei verringertem Druck durchgeführt werden.

Zur Herstellung der Matrixvorstufe werden bevorzugt solche Silane eingesetzt, deren Rest R keine OH-Gruppen und wenig C-H-Bindungen enthält. Besonders bevorzugt ist es, wenn der Rest R F-haltig ist mit einem hohen Verhältnis von C-F : C-H-Bindungen.

Zur Herstellung einer Lösung komplexierter Pr³⁺-Ionen werden eine oder mehrere Pr³⁺-Verbindungen in einem organischen Lösungsmittel (z.B. Toluol, Acetonitril oder ein Alkohol) mit 1 bis 50 Mol, bezogen auf ein Mol Pr³⁺-Verbindung, einer oder mehrerer organischen Verbindungen komplexiert, die über mindestens eine Elektronenpaar-Donorgruppe verfügen und keinen Sauerstoff aufweisen. Geeignete Komplexierungsmittel wurden bereits bei der Beschreibung der erfindungsgemäßen Materialien näher erläutert. Werden zur Komplexierung der Pr³⁺-Ionen Silane der allgemeinen Formel V eingesetzt, so bieten diese den großen Vorteil, daß über den Rest X der Praseodymkomplex in das anorganische Netzwerk der Matrix eingebaut werden kann und über den Rest R in das organische Netzwerk, wenn dieser über polymerisierbare und/oder polyaddierbare Gruppen verfügt. Dadurch sind die Praseodymkomplexe über kovalente Bindungen fest in der Matrix fixiert.

Zur Fixierung der komplexierten Pr³⁺-Ionen an nanoskalige Teilchen und zur Herstellung einer kolloidalen Lösung von an nanoskaligen Teilchen fixierten komplexierten Pr³⁺-Ionen wird entweder eine Suspension nanoskaliger Teilchen mit einer Lösung komplexierter Pr³⁺-Ionen imprägniert, oder es werden nanoskalige Teilchen in Gegenwart der Lösung komplexierter Pr³⁺-Ionen als Kolloid gefällt, wobei das Partikelverhältnis von nanoskaligem Teilchen zu komplexierten Pr³⁺-lonen bevorzugt zwischen 1:1 und 1:500 liegt. Es gibt also im Prinzip zwei Möglichkeiten, kolloidale Lösungen von komplexierten Pr³⁺-Ionen herzustellen, die an nanoskaligen Teilchen fixiert sind.

In einer ersten Variante wird aus nanoskaligen Teilchen eine Partikelsuspension gefertigt und diese mit einer Lösung von komplexierten Pr³⁺-Ionen vermischt, getränkt oder imprägniert. Dabei ist Art und Menge des Lösungsmittels so gewählt, daß eine kolloidale Lösung resultiert. Geeignete nanoskalige Teilchen wurden bereits bei der Beschreibung der erfindungsgemäßen Materialien näher erläutert.

In einer zweiten Variante werden nanoskalige Teilchen in Gegenwart von komplexierten Pr³⁺-Ionen gefällt. Dazu wird z.B. eine Pr³⁺-haltige Wolframalkoxidlösung zur Komplexierung der Pr³⁺-Ionen mit Silanen der allgemeinen Formel V oder mit tertiären Phosphanen versetzt, und dabei werden die Pr³⁺-Ionen komplexiert. Die anschließende Ckalokogenidfällung, z.B. mit Hilfe von (Me₃Si)₂S oder (Me₃Si)₂Se, führt dann zu Lösungen, die Pr³⁺-dotierte Wolframsulfid- bzw. -selenid Nanopartikel enthalten. Auch Telluride können als geeignete Chalkogenide eingeführt werden

Ohne Einschränkung der Allgemeinheit sind geeignete Pr³⁺-Verbindungen, die zur Herstellung von Lösungen komplexierter Pr³⁺-Ionen eingesetzt werden können, Praseodymalkoxide, Praseodymcarboxylate, wie z.B. Pr(OAc)₃, und Praseodymsalze, wie z.B. PrCl₃, PrF₃ oder PrH₃. Bevorzugt werden ionische, dissoziierbare Pr³⁺-Verbindungen eingesetzt. Es versteht sich von selbst, daß die Anionen der eingesetzten Pr³⁺-Salze die Komplexierung nicht behindern dürfen. Bevorzugt werden wasserfreie Ausgangsverbindungen eingesetzt.

Geeignete Lösungsmittel zur Herstellung der Lösungen komplexierter Pr³⁺-Ionen sind ohne Einschränkung der Allgemeinheit primäre, sekundäre, tertiäre, 1- oder 2-wertige Alkohole, Ketone, Ester, aromatische oder aliphatische Kohlenwasserstoffe, die auch halogeniert sein dürfen. Bevorzugt ist es, wenn der Siedepunkt des Lösungsmittels, bei normalen oder bei reduziertem Druck, unterhalb 150 °C liegt. Ferner sind Alkohole mit 1 bis 6 Kohlenstoffatomen besonders bevorzugt. Es versteht sich von selbst, daß das Lösungsmittel so zu wählen ist, daß die komplexierten Pr³⁺-Verbindungen und die Komplexbildner in Lösung gehen. Ohne Einschränkung der Allgemeinheit sind konkrete Beispiele für geeignete Lösungsmittel Toluol, Acetonitril, Ethanol oder Hexamethyldisiloxan.

Die Matrixvorstufe und die Lösung der komplexierten Pr³⁺-Ionen bzw. die kolloidale Lösung der an nanoskaligen Teilchen fixierten, komplexierten Pr³⁺-Ionen werden kontrolliert physikalisch miteinander vermischt. Das resultierende Sol wird gegebenenfalls mit weiteren Zusatzstoffen versehen und gegebenenfalls vom Lösungsmittel befreit. Die noch flüssige Solphase wird einem Beschichtungs- oder Formgebungsprozeß unterworfen.

Als Zusatzstoffe können dem Polykondensat eine oder mehrere radikalisch und/oder ionisch polymerisierbare Komponenten zugesetzt werden, sowie die dazu notwendigen Starter und Beschleuniger. Ferner können Weichmacher und andere Verarbeitungshilfsstoffe in der Matrix enthalten sein.

Enthalten die Matrix und/oder die Praseodymkomplexe und/oder die Zusatzstoffe polymerisierbare und/oder polyaddierbare Gruppen, wie z.B. C=C-Doppelbindungen (z.B. Acrylate, Methacrylate, Styrole, Vinylgruppen), Oxiran-, Isocyanat oder Spirogruppen oder cyclische Anhydride, so kann der nasse Gelfilm oder - körper einer redoxinduzierten oder thermisch, kovalent-nucleophil oder photochemisch induzierten Härtung unterzogen werden, gegebenenfalls unter Zusatz geeigneter Initiatoren. Dabei wird durch Polymerisation bzw. Polyaddition das organische Netzwerk aufgebaut.

Das erfindungsgemäße Verfahren stellt einen naßchemischen Syntheseweg zur Herstellung NIR-fluoreszierender Pr-haltiger Hybridmaterialien dar. Durch die Verwendung einer Matrix auf der Basis einer organisch-modifizierter Keramik können die hydrophilen/hydrophoben Eigenschaften der Matrix und damit der erfindungsgmäßen Materialien gezielt eingestellt werden. Ferner können die Wellenleitereigenschaften der erfindungsgemäßen Materialien sowie die Mikrostrukturierung hinsichtlich der Fertigstellung von Testkomponenten für planare Lichtverstärker gezielt eingestellt werden.

Ferner wurde überraschenderweise festgestellt, daß die Anwesenheit von nanoskaligen Teilchen als Pr-Träger die Fluoreszenzquantenausbeute der Pr³⁺-Ionen im Komposit um einen Faktor von bis zu 6 erhöht. Dies ist wahrscheinlich auf eine verbesserte homogene Verteilung der Pr³⁺-Ionen und somit auf eine weitestgehende Blockierung des Konzentrationsquenchings gegenüber den bisher bekannten Materialien zurückzuführen.

Die erfindungsgemäßen Materialien können in der Sensorik, in optischen Schaltungen und Displays, als Photoleiter, in der Telekommunikation und ganz allgemein für photo- und elektroaktive Anwendungen eingesetzt werden. Die erfindungsgemäßen Materialien sind insbesondere deswegen für Anwendungen in der Telekommunikation von Interesse, weil die Fluoreszenzwellenlänge der erfindungsgemäßen Materialien im Bereich der Kommunikationsfrequenz liegt. Werden Si- oder Ge-Teilchen als nanoskalige Teilchen verwendet, so ergeben sich aus der Tatsache, daß Si und Ge selbst fluoreszieren, erhebliche Freiräume für die Einkopplung von Energie in die erfindungsgemäßen fluoreszierenden Materialien.

Anhand von Ausführungsbeispielen wird die Herstellung der erfindunsgemäßen Materialien näher erläutert.

### Beispiel 1:

Im ersten Schritt wird eine ethanolische 0.01 bis 0.5 molare PrCl₃-Lösung vorgelegt und mit einer ethanolischen 0.01 bis 0.1 molaren Wolfram(Vl)methanolat-Lösung vermischt. Zu dieser Lösung wird eine eine Ethylendiamin-Gruppe tragende Siliciumtriethoxyverbindung unter Rühren tropfenweise hinzugefügt. Das molare Verhältnis von Si:Pr liegt vorzugsweise zwischen 0.5:1 und 5:1, dasjenige von Si:W zwischen 1:3 und 1:10. Der resultierenden Pr-W-Komplexlösung wird unter Rühren unter Argonatmosphäre bei Raumtemperatur eine 0.1 molare Lösung von (Me₃Si)₂Se in Heptan tropfenweise zugefügt. Das molar Verhältnis von Se:W liegt vorzugsweise zwischen 1:1 und 1:3.

In einem weiteren Schritt wird die optisch transparente, partikelhaltige (Pr-dotierte WSe-Partikel) Lösung bei Raumtemperatur und unter Rühren zu einem Matrixvorhydrolysat tropfenweise hinzugefügt. Dieses Matrixvorhydrolysat setzt sich zusammen aus dem hydrolysierten Umsetzungsprodukt aus Trimethylolpropantriacrylat (TMPTA) bzw. Tetrafluorpropylmethacrylat (TFPMA) und Mercaptopropylmethyldimethoxysilan (MPMDMS) und . Diesem Matrixsol kann optionsweise ein thermischer oder photochemischer Polymerisationsstarter zugefügt werden.

Die resultierenden Matrixssole sind optisch transparent und werden gegebenenfalls am Rotationsverdampfer vom Lösungsmittel befreit (30 °C, 30 Torr, Wasserstrahlvakuum, anschließend Hochvakuum). Zum Schluß erfolgt eine Formgebung durch Eingießen in Polycarbonatschälchen geeigneter Form. Der Härtungsprozeß findet unter Normaldruck und Atmosphäre in einem staubfreien Temperofen für die Dauer von 10 Tagen. Dabei wird die Temperatur kontinuierlich von 35 °C auf 95 °C erhöht. Es resultieren rißfreie, optisch transparente Formkörper oder Schichten einer schwach oder stark grünen oder roten Farbe.

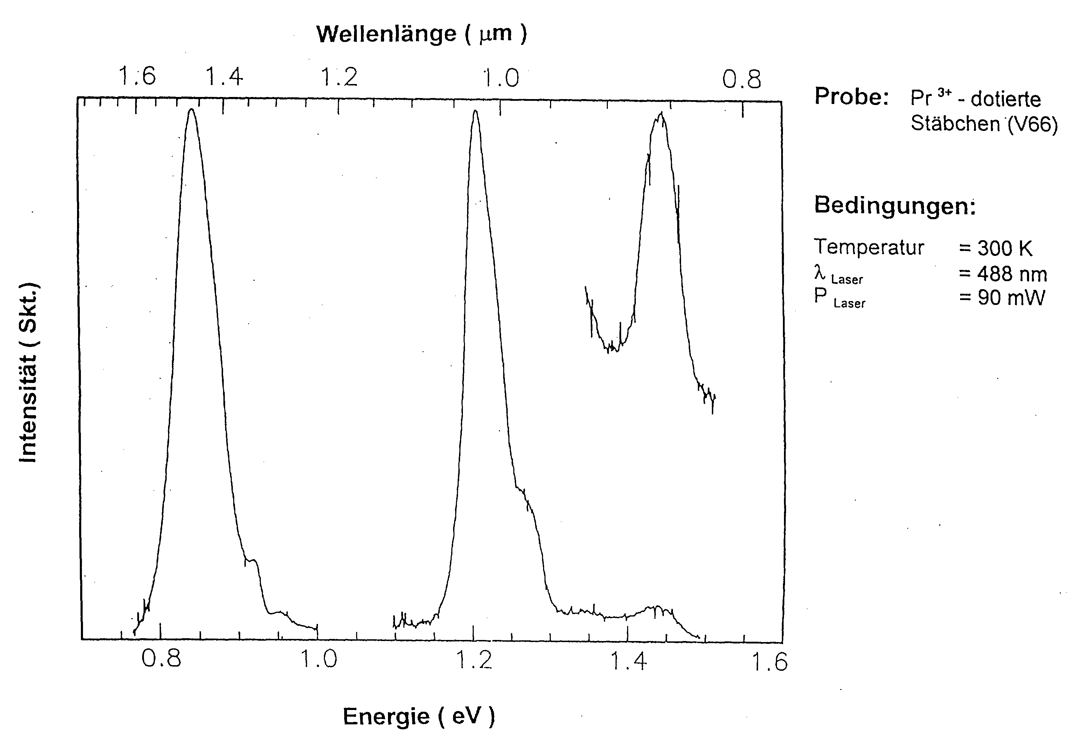

Die Abbildung zeigt das Fluoreszenzspektrum. Zur Fluoreszenzmessung wurde mit einem Argonionen-Laser bei λ = 488 nm angeregt, die Laserleistung betrug 90 mW, die Temperatur 300 K.

### Beispiel 2:

Eine 0.4 m Praseodymthiocyanatlösung in Acetonitril wird durch Zusammengeben von 1.48 g (6 mmol) PrCl₃, 3.48 g (36 mmol) KSCN und 15 ml Acetonitril hergestellt. Die Mischung wird 2 h unter Rückfluß erhitzt, anschließend wird der farblose Niederschlag (KCI) bei Raumtemperatur abfiltriert. Man erhält eine kräftig grüne Lösung. 5 ml dieser Lösung werden mit 5 ml eines Lackes aus teilfluoriertem Kieselsäurepolykondensat (bestehend aus 1 Gew.Teil TMPTA, 1 Gew. Teil MPMDMS und 0.5 Gew.Teile TFPMA) vermischt und mit 50 mg AIBN versetzt. Anschließend wird das Acetonitril im Wasserstrahlvakuum bei Raumtemperatur abgezogen. Die Formgebung erfolgt durch Aufziehen des Lacksystems in 1 ml Einwegspritzen. Die thermische Härtung wird in einem Trockenschrank durchgeführt. Dazu wird die Temperatur innerhalb von 5 Tagen langsam von 30 °C auf 100 °C gesteigert.

## Patentansprüche

1. Fluoreszierende Materialien mit einer Matrix auf der Basis von Kieselsäure(hetero)polykondensaten und/oder von organischen Polymerern, mit darin enthaltenen Pr³⁺-Ionen und mit gegebenenfalls weiteren Zusatzstoffen mit folgenden Merkmalen:
• die Pr³⁺-Ionen sind mit einer oder mehreren Verbindungen komplexiert, die über mindestens eine Elektronenpaar-Donorgruppe verfügen und die keine Sauerstoffatome ausweisen;
• das molare Verhältnis von Pr³⁺-Ionen zu Komplexbildner liegt zwischen 1:4 und 1:50;
• der Gehalt an Pr³⁺-Ionen in den fluoreszierenden Materialien liegt zwischen 1 und 50 Gew.-%.

2. Fluoreszierende Materialien nach Anspruch 1, dadurch gekennzeichnet, daß das Kieselsäure(hetero)polykondensat ein hydrolytisches (Vor)Kondensat einer oder mehrerer hydrolytisch kondensierbarer Verbindungen des Siliciums und gegebenenfalls anderer Elemente aus der Gruppe B, Al, Ge, P, As, Sb, Sn, Pb, der Übergangsmetalle, der Lanthaniden und der Actiniden, und/oder von den oben genannten Verbindungen abgeleiteten Vorkondensaten, gegebenenfalls in Anwesenheit eines Katalysators und/oder eines Lösungsmittels, durch Einwirkung von Wasser oder Feuchtigkeit ist.

3. Fluoreszierende Materialien nach Anspruch 2, dadurch gekennzeichnet, daß 5 bis 100 Mol-% der hydrolytisch (vor)kondensierten Verbindungen, auf der Basis monomerer Verbindungen, abgeleitet sind von Silanen der allgemeinen Formel I,
Si Rₐ X_{b} (I)
in der die Reste R und X gleich oder verschieden sind und folgende Bedeutung haben:
R = Alkyl, Alkenyl, Aryl, Alkylaryl oder Arylalkyl, wobei diese Reste durch Sauerstoff- oder Schwefelatome oder -NH-Gruppen unterbrochen sein können und/oder Spiro-, Oxiran-, cyclische Anhydrid- oder Isocyanat-Gruppen enthalten können
X = Wasserstoff, Halogen, Hydroxy, Alkoxy, Acyloxy, Alkylcarbonyl, Alkoxycarbonyl oder NR'₂, mit R' = Wasserstoff, Alkyl oder Aryl,
a = 1, 2, oder 3,
b = 1, 2, oder 3,
mit a+b = 4.

4. Fluoreszierende Materialien nach Anspruch 3, dadurch gekennzeichnet, daß die Matrix als weitere hydrolytisch (vor)kondensierte Verbindungen des Siliciums eine oder mehrere Verbindungen enthält, die sich von Siliciumverbindungen der allgemeinen Formel II ableiten,
Rₐ (R"Z')_{b} Si X_{4-(a+b)} (II)
in der die Reste und Indices folgende Bedeutung haben:
R = Alkyl, Alkenyl, Aryl, Alkylaryl oder Arylalkyl,
R" = Alkylen oder Alkenylen, wobei diese Reste durch Sauerstoff- oder Schwefelatome oder -NH-Gruppen unterbrochen sein können,
X = Wasserstoff, Halogen, Hydroxy, Alkoxy, Acyloxy, Alkylcarbonyl, Alkoxycarbonyl oder NR'₂, mit R' = Wasserstoff, Alkyl oder Aryl,
Z' = Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinyl-Gruppe,
a = 0, 1, 2, oder 3,
b = = 0, 1, 2, oder 3,
mit a+b = 1,2 oder 3.

5. Fluoreszierende Materialien nach einem oder mehreren der Ansprüche 2 bis 4, dadurch gekennzeichnet, daß die Matrix als weitere hydrolytisch (vor)kondensierte Verbindungen des Siliciums eine oder mehrere Verbindungen enthält, die sich von Siliciumverbindungen der allgemeinen Formel III ableiten,
{Xₙ Rₖ Si [(R²A)ₗ]₄₋₍ₙ₊ₖ₎}_{X} B (III)
in der die Reste und Indices folgende Bedeutung haben:
A = O, S, PR', POR', NHC(O)O oder NHC(O)NR',
mit R' = Wasserstoff, Alkyl oder Aryl,
B = geradkettiger oder verzweigter organischer Rest, der sich von einer Verbindung B' mit mindestens einer (für l = 1 und A = NHC(O)O oder NHC(O)NR') bzw. mindestens zwei C=C-Doppelbindungen und 5 bis 50 Kohlenstoff-Atomen ableitet,
mit R'= Wasserstoff, Alkyl oder Aryl,
R = Alkyl, Alkenyl, Aryl, Alkylaryl oder Arylalkyl,
R² = Alkylen, Arylen oder Alkylenarylen,
X = Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
n = 1, 2 oder 3,
k = 0, 1 oder 2,
l = 0 oder 1,
x = eine ganze Zahl, deren Maximalwert der Anzahl von Doppelbindungen in der Verbindung B' minus 1 entspricht, bzw. gleich der Anzahl von Doppelbindungen in der Verbindung B' ist, wenn l = 1 und A für NHC(O)O oder NHC(O)NR steht.

6. Fluoreszierende Materialien nach einem oder mehreren der Ansprüche 2 bis 5, dadurch gekennzeichnet, daß die Matrix als weitere hydrolytisch (vor)kondensierte Verbindungen des Siliciums eine oder mehrere Verbindungen enthält, die sich von Siliciumverbindungen der allgemeinen Formel IV ableiten,
Yₙ Si Xₘ R₄₋₍ₙ₊ₘ₎ (IV)
in der die Reste X, Y und R gleich oder verschieden sind und folgende Bedeutung haben:
R = Alkyl, Alkenyl, Aryl, Alkylaryl oder Arylalkyl,
X = Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
Y = ein Substituent, der einen substituierten oder unsubstituierten 1,4,6-Trioxaspiro-[4,4]-nonan-Rest enthält,
n = 1, 2 oder 3,
m = 1, 2 oder 3, mit n+m ≤ 4.

7. Fluoreszierende Materialien nach einem oder mehreren der Ansprüche 2 bis 6, dadurch gekennzeichnet, daß die Matrix als weitere hydrolytisch (vor)kondensierte Verbindungen eine oder mehrere Verbindungen enthält, die sich von Aluminium-, Zirkonium- oder Titanverbindungen der allgemeinen Formel
Al R°₃ oder M X_{y} R_{z}
ableiten, in der M Titan oder Zirkonium bedeutet, die Reste R, R° und X gleich oder verschieden sind, R° Halogen, Hydroxy, Alkoxy oder Acyloxy darstellt, y eine ganze Zahl von 1 bis 4 ist, insbesondere 2 bis 4, z für 0, 1, 2 oder 3 steht, vorzugsweise für 0, 1 oder 2, und X und R wie im Falle der allgemeinen Formel I definiert sind.

8. Fluoreszierende Materialien nach einem oder mehreren der Ansprüche 1 bis 7, dadurch gekennzeichnet, daß das organische Polymer ein Polyacrylnitril, ein Polyacrylat, ein Polymethacrylat, ein Polystyrol, ein Polypropylen oder ein Copolymeres derselben ist.

9. Fluoreszierende Materialien nach einem oder mehreren der Ansprüche 1 bis 8, dadurch gekennzeichnet, daß die komplexierten Pr³⁺-Ionen an nanoskaligen Teilchen fixiert sind, die Durchmesser von ≤ 20 nm aufweisen.

10. Fluoreszierende Materialien nach einem oder mehreren der Ansprüche 1 bis 9, dadurch gekennzeichnet, daß der Anteil der nanoskaligen Teilchen in den fluoreszierenden Materialien zwischen 0 und 40 Vol.-% liegt.

11. Fluoreszierende Materialien nach Anspruch 9 oder 10, dadurch gekennzeichnet, daß das Partikelverhältnis von nanoskaligem Teilchen zu Pr³⁺-Ionen zwischen 1:1 und 1:500 liegt.

12. Fluoreszierende Materialien nach einem oder mehreren der Ansprüche 1 bis 11, dadurch gekennzeichnet, daß der Komplexbildner für die Pr³⁺-lonen ein Thiocyanat, ein Porphyrin, ein Phosphan, ein Polysulfid, ein Dithiolat, ein Mercaptan, ein Thiocarbonat, eine Verbindung mit einem oder mehreren Stickstoffatomen oder ein Silan der allgemeinen Formel V ist,
Si Rₐ L_{c} X_{b} (V)
in der die Reste R, L und X gleich oder verschieden sind und folgende Bedeutung haben:
R = Alkyl, Alkenyl, Aryl, Alkylaryl oder Arylalkyl, wobei diese Reste durch Schwefelatome oder -NH-Gruppen unterbrochen sein können,
L = Alkyl, Alkenyl, Aryl, Alkylaryl oder Arylalkyl mit einer oder mehreren Phosphan-, Mercapto- oder primären und/oder sekundären Aminogruppen,
X = Wasserstoff, Halogen, Hydroxy, Alkoxy, Acyloxy, Alkylcarbonyl, Alkoxycarbonyl oder NR'₂, mit R' = Wasserstoff, Alkyl oder Aryl,
a = 0, 1, 2, oder 3,
b = 0, 1, 2, oder 3,
C = 1, 2, 3 oder 4, mit a+b+c = 4;

13. Fluoreszierende Materialien nach einem oder mehreren der Ansprüche 9 bis 12, dadurch gekennzeichnet, daß die nanoskaligen Teilchen Sulfide und/oder Selenide und/oder Telluride der Übergangsmetalle, bevorzugt des Wolfram, sind.

14. Fluoreszierende Materialien nach einem oder mehreren der Ansprüche 1 bis 13, dadurch gekennzeichnet, daß die Matrix polymerisierbare organische Monomere und/oder Oligomere enthält.

15. Verfahren zur Herstellung von fluoreszierenden Materialien nach einem oder mehreren der Ansprüche 2 bis 14 mit folgenden Merkmalen:
• Man fertigt eine Matrixvorstufe durch hydrolytische (Vor)Kondensation einer oder mehrerer hydrolytisch kondensierbarer Verbindungen des Siliciums und gegebenenfalls anderer Elemente aus der Gruppe B, Al, Ge, P, As, Sb, Sn, Pb, der Übergangsmetalle, der Lanthaniden und der Actiniden, und/oder von den oben genannten Verbindungen abgeleiteten Vorkondensaten, gegebenenfalls in Anwesenheit eines Katalysators und/oder eines Lösungsmittels, durch Einwirkung von Wasser oder von Feuchtigkeit, und gegebenenfalls durch Zugabe weiterer Zusatzstoffe;
• 5 bis 100 Mol-% der hydrolytisch (vor)kondensierten Verbindungen, auf der Basis monomerer Verbindungen, sind ausgewählt aus Silanen der allgemeinen Formel I,
Si Rₐ X_{b} (I)
in der die Reste R und X gleich oder verschieden sind und folgende Bedeutung haben:
R = Alkyl, Alkenyl, Aryl, Alkylaryl oder Arylalkyl, wobei diese Reste durch Sauerstoff- oder Schwefelatome oder -NH-Gruppen unterbrochen sein können und/oder Spiro-, Oxiran-, cyclische Anhydrid- oder Isocyanat-Gruppen enthalten können
X = Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
a = 1, 2, oder 3,
b = 1, 2, oder 3,
mit a+b = 4;
• zur Herstellung einer Lösung komplexierter Pr³⁺-lonen werden eines oder mehrere Pr³⁺-Salze in einem organischen Lösungsmittel mit 4 bis 50 Mol, bezogen auf ein Mol Pr³⁺-Salz, einer oder mehrerer organischen Verbindungen komplexiert, die über mindestens eine Elektronenpaar-Donorgruppe verfügen und die keine Sauerstoffatome aufweisen;
• zur Fixierung der komplexierten Pr³⁺-lonen an nanoskalige Teilchen und zur Herstellung einer kolloidalen Lösung von an nanoskaligen Teilchen fixierten komplexierten Pr³⁺-lonen wird entweder eine Suspension nanoskaliger Teilchen mit einer Lösung komplexierter Pr³⁺-lonen imprägniert, oder es werden nanoskalige Teilchen in Gegenwart einer Lösung komplexierter Pr³⁺-lonen als Kolloid gefällt, wobei das Partikelverhältnis von nanoskaligem Teilchen zu komplexierten Pr³⁺-lonen zwischen 1:1 und 1:500 liegt;
• die Matrixvorstufe und die Lösung der komplexierter Pr³⁺-lonen oder die kolloidalen Lösung von an nanoskaligen Teilchen fixierten komplexierten Pr³⁺-lonen werden mit einander vermischt und gegebenenfalls mit weiteren Zusatzstoffen versehen;
• die resultierende Mischung wird gegebenenfalls ganz oder teilweise vom Lösungsmittel befreit und der Formgebung unterworfen;
• gegebenenfalls wird die resultierende Masse vollständig polykondensiert und/oder einer thermisch und/oder photochemisch induzierten Härtung unterworfen.

16. Verfahren nach Anspruch 15, dadurch gekennzeichnet, daß als Komplexbildner für die Pr³⁺-lonen ein Thiocyanat, ein Porphyrin, ein Phosphan, ein Polysulfid, ein Dithiolat, ein Mercaptan, ein Thiocarbonat, eine Verbindung mit einem oder mehreren Stickstoffatomen oder ein Silan der allgemeinen Formel V eingesetzt wird,
Si Rₐ L_{c} X_{b} (V)
in der die Reste R, L und X gleich oder verschieden sind und folgende Bedeutung haben:
R = Alkyl, Alkenyl, Aryl, Alkylaryl oder Arylalkyl, wobei diese Reste durch Schwefelatome oder -NH-Gruppen unterbrochen sein können,
L = Alkyl, Alkenyl, Aryl, Alkylaryl oder Arylalkyl mit einer oder mehreren Phosphan-, Mercapto- oder primären und/oder sekundären Aminogruppen
X = Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
a = 0, 1, 2, oder 3,
b = 0, 1, 2, oder 3,
c = 1, 2, 3 oder 4,
mit a+b+c = 4.

17. Verfahren nach Anspruch 15 oder 16, dadurch gekennzeichnet, daß man als nanoskalige Teilchen Sulfide und/oder Selenide und/oder Telluride der Übergangsmetalle, bevorzugt des Wolframs, einsetzt.

18. Verfahren nach einem oder mehreren der Ansprüche 15 bis 17, dadurch gekennzeichnet, daß man als weitere hydrolytisch kondensierbare Verbindungen des Siliciums eine oder mehrere Verbindungen der allgemeinen Formel II, gegebenenfalls in vorkondensierter Form, einsetzt,
Rₐ (R"Z')_{b} Si X_{4-(a+b)} (II)
in der die Reste und Indices folgende Bedeutung haben:
R = Alkyl, Alkenyl, Aryl, Alkylaryl oder Arylalkyl,
R" = Alkylen oder Alkenylen, wobei diese Reste durch Sauerstoff- oder Schwefelatome oder -NH-Gruppen unterbrochen sein können,
X = Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
Z' = Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinylgruppe,
a = 0, 1, 2, oder 3,
b = 0, 1, 2, oder 3,
mit a+b = 1, 2 oder 3.

19. Verfahren nach einem oder mehreren der Ansprüche 15 bis 18, dadurch gekennzeichnet, daß man als weitere hydrolytisch kondensierbare Verbindungen des Siliciums eine oder mehrere Verbindungen der allgemeinen Formel III, gegebenenfalls in vorkondensierter Form, einsetzt,
{Xₙ Rₖ Si [(R²A)ₗ]₄₋₍ₙ₊ₖ₎}_{X} B (III)
in der die Reste und Indices folgende Bedeutung haben:
A = O, S, PR', POR', NHC(O)O oder NHC(O)NR',
mit R' = Wasserstoff, Alkyl oder Aryl,
B = geradkettiger oder verzweigter organischer Rest, der sich von einer Verbindung B' mit mindestens einer (für l = 1 und A = NHC(O)O oder NHC(O)NR') bzw. mindestens zwei C=C-Doppelbindungen und 5 bis 50 Kohlenstoff-Atomen ableitet,
mit R'= Wasserstoff, Alkyl oder Aryl,
R = Alkyl, Alkenyl, Aryl, Alkylaryl oder Arylalkyl,
R² = Alkylen, Arylen oder Alkylenarylen,
X = Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
n = 1, 2 oder 3,
k = 0, 1 oder 2,
l = 0 oder 1,
x = eine ganze Zahl, deren Maximalwert der Anzahl von Doppelbindungen in der Verbindung B' minus 1 entspricht, bzw. gleich der Anzahl von Doppelbindungen in der Verbindung B' ist, wenn l = 1 und A für NHC(O)O oder NHC(O)NR steht.

20. Verfahren nach einem oder mehreren der Ansprüche 15 bis 19, dadurch gekennzeichnet, daß man als weitere hydrolytisch kondensierbare Verbindungen des Siliciums eine oder mehrere Verbindungen der allgemeinen Formel IV, gegebenenfalls in vorkondensierter Form, einsetzt,
Yₙ Si Xₘ R₄₋₍ₙ₊ₘ₎ (IV)
in der die Reste X, Y und R gleich oder verschieden sind und folgende Bedeutung haben:
R = Alkyl, Alkenyl, Aryl, Alkylaryl oder Arylalkyl,
X = Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
Y = ein Substituent, der einen substituierten oder unsubstituierten 1,4,6-Trioxaspiro-[4,4]-nonan-Rest enthält,
n = 1, 2 oder 3,
m = 1, 2 oder 3, mit n+m ≤ 4.

21. Verfahren nach einem oder mehreren der Ansprüche 15 bis 20, dadurch gekennzeichnet, daß man als weitere hydrolytisch kondensierbare Verbindungen eine oder mehrere Verbindungen einsetzt, die sich von Aluminium-, Zirkonium- oder Titanverbindungen der allgemeinen Formel
Al R°₃ oder M X_{y} R_{z}
ableiten, in der M Titan oder Zirkonium bedeutet, die Reste R, R° und X gleich oder verschieden sind, R° Halogen, Hydroxy, Alkoxy oder Acyloxy darstellt, y eine ganze Zahl von 1 bis 4 ist, insbesondere 2 bis 4, z für 0, 1, 2 oder 3 steht, vorzugsweise für 0, 1 oder 2, und X und R wie im Falle der allgemeinen Formel I definiert sind.

22. Verfahren nach einem oder mehreren der Ansprüche 15 bis 21, dadurch gekennzeichnet, daß man vor der Fromgebung polymerisierbare organische Monomere und/oder Oligomere und/oder weitere Zusatzstoffe zusetzt.

23. Verwendung der fluoreszierenden Materialien nach einem oder mehreren der Ansprüche 1 bis 14 zur Herstellung von Beschichtungen, von Formkörpern, von Fasern oder von Folien.

24. Verwendung der fluoreszierenden Materialien nach einem oder mehreren der Ansprüche 1 bis 14 zur Herstellung von Bauteilen für die Photonik oder für optische Systeme.

## Claims

1. Fluorescent materials with a matrix on a base of silicic acid (hetero)polycondensate and/or organic polymers with Pr³⁺ ions contained therein and possibly with further supplementary materials which have the following features:
the Pr³⁺ ions form a complex with one or more compounds which have at least one electron pair-donor group and show no oxygen atoms;
the molar ratio of Pr³⁺ ions to complexing agents is between 1:4 and 1:50;
the content of Pr³⁺ ions in the fluorescent materials is between 1 and 50% by weight.

2. Fluorescent materials according to claim 1,
characterised in that the silicic acid (hetero)-polycondensate is a hydrolytic (pre)condensate of one or more hydrolytically condensable compounds of silicon and possibly other elements from the group B, Al, Ge, P, As, Sb, Sn, Pb, and of transition metals, lanthanides and actinides, and/or precondensates derived from the above mentioned compounds, possibly in the presence of a catalyst and/or a solvent, by means of interaction with water or moisture.

3. Fluorescent materials according to claim 2,
characterised in that 5 to 100% by mol of hydrolytically (pre)condensed compounds on a base of monomer compounds are derived from silanes of the general formula I,
Si Rₐ X_{b} (I)
in which the radicals R and X are the same or different and have the following meaning:
R = alkyl, alkenyl, aryl, alkylaryl or arylalkyl, these radicals being able to be interrupted by oxygen- or sulphur atoms or -NH groups and/or to contain spiro-, oxirane-, cyclic anhydride- or isocyanate groups,
X = hydrogen, halogen, hydroxy, alkoxy, acyloxy, alkylcarbonyl, alkoxycarbonyl or NR'₂, with R' = hydrogen, alkyl or aryl,
a = 1, 2 or 3,
b = 1, 2 or 3,
with a + b = 4.

4. Fluorescent materials according to claim 3, characterised in that the matrix contains one or more compounds as further hydrolytically (pre)condensed compounds of silicon, said compounds being derived from silicon compounds of the general formula II
Rₐ (R" Z')_{b} Si X_{4 - (a + b)} (II)
in which the radicals and indices have the following meaning:
R = alkyl, alkenyl, aryl, alkylaryl or arylalkyl,
R" = alkylene or alkenylene, these radicals being able to be interrupted by oxygen- or sulphur atoms or -NH groups
X = hydogen, halogen, hydroxy, alkoxy, acyloxy, alkylcarbonyl, alkoxycarbonyl or NR'₂, with R' = hydrogen, alkyl or aryl,
Z' = halogen or an if necessary substituted amino-, amide-, aldehyde-, alkylcarbonyl-, carboxy-, mercapto-, cyano-, alkoxy-, alkoxycarbonyl-, sulfonic acid-, phosphoric acid,- acryloxy-, methacryloxy-, epoxy- or vinyl group,
a = 0, 1, 2 or 3,
b = 0, 1, 2 or 3,
with a + b = 1, 2 or 3.

5. Fluorescent materials according to one or more of the claims 2 to 4, characterised in that the matrix contains one or more compounds as further hydrolytically (pre)condensed compounds of silicon, said compounds being derived from silicon compounds of the general formula III,
{Xₙ Rₖ Si [(R²A)_{ℓ}]_{4 - (n + k)} }ₓ ^{B} (III)
in which the radicals and indices have the following meaning:
A = O, S, PR', POR', NHC(O)O or NHC(O)NR',
with R' = hydrogen, alkyl or aryl,
B = unbranched or branched organic radical which is derived from a compound B' with at least one (for ℓ = 1 and A = NHC(O)O or NHC(O)NR') or at least two C=C double compounds and 5 to 50 carbon atoms,
with R' = hydrogen, alkyl or aryl
R = alkyl, alkenyl, aryl, alkylaryl or arylalkyl,
R² = alkylene, arylene or alkylene arylene
X = hydogen, halogen, hydroxy, alkoxy, acyloxy, alkylcarbonyl, alkoxycarbonyl or NR'₂,
with R' = hydrogen, alkyl or aryl,
n = 1, 2 or 3.
k = 0, 1 or 2,
ℓ = 0 or 1,
x = a whole number, the maximal value of which corresponds to the number of double compounds in the compound B' minus 1, or is equal to the number of double compounds in the compound B', when ℓ = 1 and A stands for NHC(O)O or NHC(O)NR.

6. Fluorescent materials according to one or more of the claims 2 to 5, characterised in that the matrix contains one or more compounds as further hydrolytically (pre)condensed compounds of silicon, said compounds being derived from silicon compounds of the general formula IV,
Yₙ Si Xₘ R_{4 - (n + m)} (IV)
in which the radicals X, Y and R are the same or different and have the following meaning:
R = alkyl, alkenyl, aryl, alkylaryl or arylalkyl,
X = hydogen, halogen, hydroxy, alkoxy, acyloxy, alkylcarbonyl, alkoxycarbonyl or NR'₂,
with R' = hydrogen, alkyl or aryl,
Y = a substituent which contains a substituted or unsubstituted 1,4,6-trioxaspiro-[4,4]-nonan radical,
n = 1, 2 or 3,
m = 1, 2 or 3, with n + m ≤ 4.

7. Fluorescent materials according to one or more of the claims 2 to 6, characterised in that the matrix contains one or more compounds as further hydrolytically (pre)condensed compounds, said compounds being derived from aluminium-, zirconium- or titanium compounds of the general formula
Al R⁰ ₃ or M X_{y} R_{z}
in which M means titanium or zirconium, the radicals R, R⁰ and X are the same or different, R⁰ represents halogen, hydroxy, alkoxy, or acyloxy, y is a whole number from 1 to 4, especially 2 to 4, z stands for 0, 1, 2 or 3, preferably for 0, 1 or 2, and X and R are defined as in the case of the general formula I.

8. Fluorescent materials according to one or more of the claims 1 to 7, characterised in that the organic polymer is a polyacrylnitrile, a polyacrylate, a polymethacrylate, a polystyrene, a polypropylene or a copolymer of the same.

9. Fluorescent materials according to one or more of the claims 1 to 8, characterised in that the complexed Pr³⁺ ions are fixed to nano-sized particles which have diameters of ≤ 20 nm.

10. Fluorescent materials according to one or more of the claims 1 to 9, characterised in that the proportion of nano-sized particles in the fluorescent materials is between 0 and 40% by volume.

11. Fluorescent materials according to claim 9 or 10, characterised in that the particle ratio of nano-sized particles to Pr³⁺ ions is between 1:1 and 1:500.

12. Fluorescent materials according to one or more of the claims 1 to 11, characterised in that the complexing agent for the Pr³⁺ ions is a thiocyanate, a porphyrine, a phosphane, a polysulfide, a dithiolate, a mercaptan, a thiocarbonate, a compound with one or more nitrogen atoms or a silane of the general formula (V),
Si Rₐ L_{c} X_{b} (V)
in which the radicals R, L and X are the same or different and have the following meaning:
R = alkyl, alkenyl, aryl, alkylaryl or arylalkyl, these radicals being able to be interrupted by sulphur atoms or -NH groups,
L = alkyl, alkenyl, aryl, alkylaryl or arylalkyl, with one or more phosphane-, mercapto- or primary and/or secondary amino groups.
X = hydogen, halogen, hydroxy, alkoxy, acyloxy, alkylcarbonyl, alkoxycarbonyl or NR'₂, with R' = hydrogen, alkyl or aryl,
a = 0, 1, 2 or 3,
b = 0, 1, 2 or 3,
c = 1, 2, 3 or 4,
with a + b + c = 4;

13. Fluorescent materials according to one or more of the claims 9 to 12, characterised in that the nano-sized particles are sulfides and/or selenides and/or tellurides of the transition metals, preferably of tungsten.

14. Fluorescent materials according to one or more of the claims 1 to 13, characterised in that the matrix contains polymerisable organic monomers and/or oligomers.

15. Method for producing fluorescent materials according to one or more of the claims 2 to 14 with the following features:
an initial matrix stage is made by hydrolytic (pre)condensation of one or more hydrolytically condensable compounds of silicon and if necessary of other elements of the group B, Al, Ge, P, As, Sb, Sn, Pb, of transition metals, lanthanides and actinides, and/or precondensates derived from the above mentioned compounds, possibly in the presence of a catalyst and/or a solvent, by means of interaction with water or moisture and if necessary by adding further supplementary materials;
5 to 100% by mol of hydrolytically (pre)condensed compounds on a base of monomer compounds are selected from silanes of the general formula I,
Si Rₐ X_{b} (I)
in which the radicals R and X are the same or different and have the following meaning:
R = alkyl, alkenyl, aryl, alkylaryl or arylalkyl, these radicals being able to be interrupted by oxygen- or sulphur atoms or -NH groups and/or to contain spiro-, oxirane-, cyclic anhydride- or isocyanate groups
X = hydogen, halogen, hydroxy, alkoxy, acyloxy, alkylcarbonyl, alkoxycarbonyl or NR'₂,
with R' = hydrogen, alkyl or aryl,
a = 1, 2 or 3,
b = 1, 2 or 3,
with a + b = 4;
in order to produce a solution of complexed Pr³⁺ ions, one or more Pr³⁺ salts in an organic solvent with 4 to 50 mol, relative to one mol Pr³⁺ salt is made to form a complex with one or more organic compounds which have at least one electron pair-donor group and have no oxygen atoms;
in order to fix the complexed Pr³⁺ ions to nano-sized particles and to produce a colloidal solution of complexed Pr³⁺ ions fixed to nano-sized particles, either a suspension of nano-sized particles is impregnated with a solution of complexed Pr³⁺ ions or nano-sized particles in the presence of a solution of complexed Pr³⁺ ions is precipitated as a colloid, the particle ratio of nano-sized particles to complexed Pr³⁺ ions being between 1:1 and 1:500;
the initial matrix stage and the solution of complexed Pr³⁺ ions or the colloidal solution of complexed Pr³⁺ ions fixed to nano-sized particles are mixed with each other and if necessary provided with further supplementary materials;
the resulting mixture is freed from the solvent possibly in total or in part and subjected to moulding;
if necessary the resulting mass is completely polycondensed and/or subjected to a thermally and/or photochemically induced hardening.

16. Method according to claim 15, characterised in that as a complexing agent for the Pr³⁺ ions there is used a thiocynate, a porphyrine, a phosphane, a polysulfide, a dithiolate, a mercaptan, a thiocarbonate, a compound with one or more nitrogen atoms or a silane of the general formula V,
Si Rₐ L_{c} X_{b} (V)
in which the radicals R, L and X are the same or different and have the following meaning:
R = alkyl, alkenyl, aryl, alkylaryl or arylalkyl, these radicals being able to be interrupted by sulphur atoms or -NH groups,
L = alkyl, alkenyl, aryl, alkylaryl or arylalkyl, with one or more phosphane-, mercapto- or primary and/or secondary amino groups.
X = hydogen, halogen, hydroxy, alkoxy, acyloxy, alkylcarbonyl, alkoxycarbonyl or NR'₂, with R' = hydrogen, alkyl or aryl,
a = 0, 1, 2 or 3,
b = 0, 1, 2 or 3,
c = 1, 2, 3 or 4,
with a + b + c = 4.

17. Method according to claim 15 or 16, characterised in that sulfides and/or selenides and/or tellurides of the transitional metals, preferably of tungsten, are used as nano-sized particles.

18. Method according to one or more of the claims 15 to 17, characterised in that one or more compounds of the general formula II, if necessary in a precondensed form, are used as further hydrolytically condensable compounds of silicon,
Rₐ (R" Z')_{b} Si X_{4 - (a + b)} (II)
in which the radicals and indices have the following meaning:
R = alkyl, alkenyl, aryl, alkylaryl or arylalkyl,
R" = alkylene or alkenylene, these radicals being able to be interrupted by oxygen- or sulphur atoms or -NH groups,
X = hydogen, halogen, hydroxy, alkoxy, acyloxy, alkylcarbonyl, alkoxycarbonyl or NR'₂, with R' = hydrogen, alkyl or aryl,
Z' = halogen or an if necessary substituted amino-, amide-, aldehyde-, alkylcarbonyl-, carboxy-, mercapto-, cyano-, alkoxy-, alkoxycarbonyl-, sulfonic acid-, phosphoric acid-, acryloxy-, methacryloxy-, epoxy- or vinyl group,
a = 0, 1, 2 or 3,
b = 0, 1, 2 or 3,
with a + b = 1, 2 or 3.

19. Method according to one or more of the claims 15 to 18, characterised in that one or more compounds of the general formula III, if necessary in a precondensed form, are used as further hydrolytically condensable compounds of silicon,
{Xₙ Rₖ Si [(R² A)_{ℓ}]_{4 - (n + k)} }ₓ ^{B} (III)
in which the radicals and indices have the following meaning:
A = O, S, PR', POR', NHC(O)O or NHC(O)NR',
with R' = hydrogen, alkyl or aryl,
B = unbranched or branched organic radical which is derived from a compound B' with at least one (for ℓ = 1 and A = NHC(O)O or NHC(O)NR') or at least two C=C double compounds and 5 to 50 carbon atoms,
with R' = hydrogen, alkyl or aryl
R = alkyl, alkenyl, aryl, alkylaryl or arylalkyl,
R² = alkylene, arylene or alkylene arylene
X = hydrogen, halogen, hydroxy, alkoxy, acyloxy, alkylcarbonyl, alkoxycarbonyl or NR'₂,
with R' = hydrogen, alkyl or aryl,
n = 1, 2 or 3.
k = 0, 1 or 2,
ℓ = 0 or 1,
x = a whole number, the maximal value of which corresponds to the number of double compounds in the compound B' minus 1, or is equal to the number of double compounds in the compound B', when ℓ = 1 and A stands for NHC(O)O or NHC(O)NR.

20. Method according to one or more of the claims 15 to 19, characterised in that one or more compounds of the general formula IV, if necessary in a precondensed form, are used as further hydrolytically condensable compounds of silicon,
Yₙ Si Xₘ R_{4 - (n + m)} (IV)
in which the radicals X, Y and R are the same or different and have the following meaning:
R = alkyl, alkenyl, aryl, alkylaryl or arylalkyl,
X = hydrogen, halogen, hydroxy, alkoxy, acyloxy, alkylcarbonyl, alkoxycarbonyl or NR'₂,
with R' = hydrogen, alkyl or aryl,
Y = a substituent which contains a substituted or unsubstituted 1,4,6-trioxaspiro-[4,4]-nonan radical,
n = 1, 2 or 3,
m = 1, 2 or 3, with n + m ≤ 4.

21. Method according to one or more of the claims 15 to 20, characterised in that one or more compounds are used as further hydrolytically condensable compounds, said compounds being derived from aluminium-, zirconium- or titanium compounds of the general formula
Al R⁰ ₃ or M X_{y} R_{z}
in which M means titanium or zirconium, the radicals R, R⁰ and X are the same or different, R⁰ represents halogen, hydroxy, alkoxy or acyloxy, y is a whole number from 1 to 4, especially 2 to 4, z stands for 0, 1, 2 or 3,
preferably for 0, 1 or 2, and X and R are defined as in the case of the general formula I.

22. Method according to one or more of the claims 15 to 21, characterised in that, before moulding, polymerisable, organic monomers and/or oligomers and/or further supplementary materials are added.

23. Usage of fluorescent materials according to one or more of the claims 1 to 14 for producing coatings, moulding bodies, fibres and films.

24. Usage of fluorescent materials according to one or more of the claims 1 to 14 for producing components for photonics or for optical systems.

## Revendications

1. Matériaux fluorescents ayant une matrice à base de produit d'(hétéro)condensation d'acide silicique et/ou de polymères organiques, contenant des ions Pr³⁺ et avec éventuellement d'autres additifs présentant les caractéristiques suivantes :
- les ions Pr³⁺ sont complexés avec un ou plusieurs composés qui disposent d'au moins un groupe donneur de paires d'électrons et qui ne présentent pas d'atomes d'oxygène,
- le rapport molaire des ions Pr³⁺ aux agents complexants se situe entre 1:4 et 1:50,
- la teneur en ions Pr³⁺ se situe entre 1 et 50 % en poids.

2. Matériaux fluorescents selon la revendication 1,
caractérisés en ce que
le produit d'(hétéro)polycondensation d'acide silicique est un précondensat hydrolytique d'un ou plusieurs composés de silicium condensable(s) par hydrolyse et le cas échéant d'autres éléments du groupe B, Al, Ge, P, As, Sb, Sn, Pb, des métaux de transition, des lanthanides et des actinides, et/ou des produits de précondensation dérivés des composés mentionnés ci-dessus, le cas échéant en présence d'un catalyseur et/ou d'un solvant, par action de l'eau ou de l'humidité.

3. Matériaux fluorescents selon la revendication 2,
caractérisés en ce que
de 5 à 100 % molaire des composés (pré)condensés par hydrolyse, à base de composés monomères, sont dérivés de silanes de formule générale (I)
SiRₐX_{b} (I)
dans laquelle les radicaux R et X sont identiques ou différents et ont la signification suivante :
R = alkyle, alcényle, aryle, alkylaryle ou arylalkyle, où ces radicaux peuvent être interrompus par des atomes d'oxygène ou de soufre ou des groupes -NH et/ou peuvent contenir des groupes spiro, oxirane, anhydride cyclique ou isocyanate,
X = hydrogène, halogène, hydroxy, alcoxy, acyloxy, alkylcarbonyle, alcoxycarbonyle ou NR'2, avec R' = hydrogène, alkyle ou aryle,
a = 1, 2 ou 3,
b = 1, 2 ou 3, avec a + b = 4.

4. Matériaux fluorescents selon la revendication 3,
caractérisés en ce que
la matrice contient comme autres composés de silicium (pré)condensés par hydrolyse un ou plusieurs composés qui dérivent de composés du silicium de formule générale II,
Rₐ(R"Z')_{b}SiX_{4-(a+b)} (II)
dans laquelle les radicaux et les indices ont la signification suivante :
R = alkyle, alcényle, aryle, alkylaryle ou arylalkyle,
R" = alkylène ou alcénylène, ces radicaux pouvant être interrompus par des atomes d'oxygène ou de soufre ou des groupes -NH,
X = hydrogène, halogène, hydroxy, alcoxy, acyloxy, alkylcarbonyle, aloxycarbonyle ou NR'₂,
avec R' = hydrogène, alkyle ou aryle,
Z' = halogène ou un groupe amino, amide, aldéhyde, alkylcarbonyle, carboxy, mercapto, cyano, alcoxy, alcoxycarbonyle, acide sulfonique, acide phosphorique, acryloxy, méthacryloxy, époxy ou vinyle éventuellement substitué,
a = 0, 1, 2 ou 3,
b = 0, 1, 2 ou 3, avec a+ b = 1, 2 ou 3.

5. Matériaux fluorescents selon une ou plusieurs des revendications 2 à 4,
caractérisés en ce que
la matrice contient comme autres composés de silicium (pré)condensés par hydrolyse un ou plusieurs composés qui dérivent de composés du silicium de formule générale III,
{XₙRₖSi[(R²A)ₗ]₄₋₍ₙ₊ₖ₎}ₓB (III)
dans laquelle les radicaux et les indices ont la signification suivante :
A = O, S, PR', POR', NHC(O)O ou NHC(O)NR',
avec R' = hydrogène, alkyle ou aryle,
B = radical organique à chaîne droite ou ramifiée, qui dérive d'un composé B' avec au moins un (pour 1 = 1 et A = NHC(O)O ou NHC(O)NR') ou selon les cas au moins deux doubles liaisons C=C et de 5 à 50 atomes de carbone, avec R' = hydrogène, alkyle ou aryle,
R = alkyle, alcényle, aryle, alkylaryle ou arylalkyle,
R² = alkylène, alkylène ou alkylène arylène,
X = hydrogène, halogène, hydroxy, alcoxy, acyloxy, alkylcarbonyle, aloxycarbonyle ou NR'₂,
avec R' = hydrogène, alkyle ou aryle,
n = 1, 2 ou 3,
k = 0, 1 ou 2,
l = 0 ou 1,
X = un nombre entier, dont la valeur maximale correspond au nombre de doubles liaisons dans le composé B' moins 1, ou selon les cas est égal dans le nombre de doubles liaisons dans le composé B', lorsque 1 = 1 et A représente NHC(O)O ou NHC(O)NR.

6. Matériaux fluorescents selon une ou plusieurs des revendications 2 à 5,
caractérisés en ce que
la matrice contient, comme autres composés de silicium (pré)condensables par hydrolyse, un ou plusieurs composés qui dérivent de composés du silicium de formule générale IV,
YₙSiXₗₘR₄₋₍ₙ₊ₘ₎ (IV)
dans laquelle les radicaux X, Y et R sont identiques ou différents et ont la signification suivante :
R = alkyle, alcényle, aryle, alkylaryle ou arylalkyle,
X = hydrogène, halogène, hydroxy, alcoxy, acyloxy, alkylcarbonyle, alcoxycarbonyle ou NR'₂,
avec R' = hydrogène, alkyle ou aryle,
Y = un substituant, qui contient un radical 1,4,6-trioxaspiro-[4,4]-nonane substitué ou non substitué,
n = 1, 2 ou 3,
m = 1, 2 ou 3 avec n+m ≤ 4.

7. Matériaux fluorescents selon une ou plusieurs des revendications 2 à 6,
caractérisés en ce que
la matrice contient comme autres composés (pré)condensés par hydrolyse un ou plusieurs composés qui dérivent de composés d'aluminium, de zirconium ou de titane de formules générales
AlR°₃ ou MX_{y}R_{z}
dans lesquelles M représente le titane ou le zirconium, les radicaux R, R° et X sont identiques ou différents, R° représente un halogène, hydroxy, alcoxy ou acyloxy, y est un nombre entier de 1 à 4, en particulier de 2 à 4, z vaut 0, 1, 2 ou 3, de préférence 0, 1 ou 2, et X et R sont définis comme dans le cas de la formule générale I.

8. Matériaux fluorescents selon une ou plusieurs des revendications 1 à 7,
caractérisés en ce que
le polymère organique est un polyacrylonitrile, un polyacrylate, un polyméthacrylate, un polystyrène, un polypropylène ou un copolymère de ces corps.

9. Matériaux fluorescents selon une ou plusieurs des revendications 1 à 8,
caractérisés en ce que
les ions Pr³⁺ complexés sont fixés sur des particules de l'échelle du nanomètre qui présentent un diamètre inférieur ou égal à 20 nm.

10. Matériaux fluorescents selon une ou plusieurs des revendications 1 à 9,
caractérisés en ce que
la proportion des particules de l'échelle du nanomètre dans les matériaux fluorescents se situe entre 0 et 40 % en volume.

11. Matériaux fluorescents selon la revendication 9 ou 10,
caractérisés en ce que
le rapport particulaire des particules de l'échelle du nanomètre aux ions Pr³⁺ se situe entre 1:1 et 1:500.

12. Matériaux fluorescents selon une ou plusieurs des revendications 1 à 11,
caractérisés en ce que
le formateur de complexes pour les ions Pr³⁺ est un thiocyanate, une porphyrine, un phosphane, un polysulfure, un dithiolate, un mercaptan, un thiocarbonate, un composé ayant un ou plusieurs atomes d'azote ou un silane de formule générale (V)
SiRₐL_{c}X_{b} (V)
dans laquelle les radicaux R, L et X sont identiques ou différents et ont la signification suivante :
R = alkyle, alcényle, aryle, alkylaryle ou arylalkyle, ces radicaux pouvant être interrompus par des atomes de soufre ou des groupes -NH
L = alkyle, alcényle, aryle, alkylaryle ou arylalkyle avec un ou plusieurs groupes phosphane, mercapto ou amino primaires et/ou secondaires,
X = hydrogène, halogène, hydroxy, alcoxy, acyloxy, alkylcarbonyle, alcoxycarbonyle ou NR'₂, avec R' = hydrogène, alkyle ou aryle,
a = 0, 1, 2 ou 3,
b = 0, 1, 2 ou 3,
c = 1, 2, 3 ou 4, avec a+b+c = 4.

13. Matériaux fluorescents selon une ou plusieurs des revendications 9 à 12,
caractérisés en ce que
les particules de l'échelle du nanomètre sont des sulfures et/ou sélénures et/ou tellurures des métaux de transition, de préférence du tungstène.

14. Matériaux fluorescents selon une ou plusieurs des revendications 1 à 13,
caractérisés en ce que la matrice contient des monomères et/ou oligomères organiques polymérisables.

15. Procédé de production de matériaux fluorescents selon une ou plusieurs des revendications 2 à 14 avec les caractéristiques suivantes :
- on fabrique un précurseur de matrice par une (pré)condensation par hydrolyse d'un ou plusieurs composés de silicium condensables par hydrolyse et éventuellement d'autres éléments du groupe B, Al, Ge, P, As, Sb, Sn, Pb, des métaux de transition, des lanthanides et des actinides, et/ou de précondensats dérivés de composés mentionnés ci-dessus, éventuellement en présence d'un catalyseur et/ou d'un solvant, par action d'eau ou de l'humidité, et éventuellement par addition d'autres additifs.
- 5 à 100 % molaire des composés (pré)condensés par hydrolyse, sur la base des composés monomères, sont choisis parmi les silanes de formule générale I,
SiRₐX_{b} (I)
dans laquelle les radicaux R et X sont identiques et différents et ont la signification suivante :
R = alkyle, alcényle, aryle, alkylaryle ou arylalkyle, où ces radicaux peuvent être interrompus par des atomes d'oxygène ou de soufre ou des groupes -NH et/ou peuvent contenir des groupes spiro, oxiranne, anhydride cyclique ou isocyanate,
X = hydrogène, halogène, hydroxy, alcoxy, acyloxy, alkylcarbonyle, alcoxycarbonyle ou NR'₂, avec R' = hydrogène, alkyle ou aryle,
a = 1, 2 ou 3,
b = 1, 2 ou 3, avec a + b = 4.
- pour la production d'une solution d'ions Pr³⁺ complexés on complexe un ou plusieurs sels de Pr³⁺ organique avec de 4 à 50 moles, par rapport à une mole de sel de Pr³⁺, d'un ou plusieurs composés organiques qui disposent d'au moins un groupe donneur de paires d'électrons et qui ne présentent pas d'atomes d'oxygène,
- pour la fixation des ions Pr³⁺ complexés sur des particules à l'échelle du nanomètre et pour la production d'une solution colloïdale d'ions Pr³⁺ complexés fixés sur des particules de l'échelle du nanomètre, ou bien on imprègne une suspension de particules de l'ordre du nanomètre avec une solution d'ions Pr³⁺ complexés, ou bien on précipite sous la forme d'un colloïde des particules de l'ordre du nanomètre en présence d'une solution d'ions Pr³⁺ complexés, le rapport particulaire des particules de l'ordre du nanomètre aux ions Pr³⁺ complexés se situant entre 1:1 et 1:500 ;
- on mélange entre eux le précurseur de matrice et la solution des ions Pr³⁺ complexés ou la solution colloïdale d'ions Pr³⁺ complexés fixée sur des particules de l'ordre du nanomètre et le cas échéant on munit d'additifs supplémentaires ;
- on débarrasse le cas échéant entièrement ou partiellement le mélange résultant du solvant et on le soumet à un formage ;
- le cas échéant on effectue une polycondensation complète de la masse résultante et/ou on la soumet à un durcissement induit par un moyen chimique et/ou photochimique.

16. Procédé selon la revendication 15,
caractérisé en ce qu'
on utilise comme formateur de complexes pour les ions Pr³⁺ est un thiocyanate, une porphyrine, un phosphane, un polysulfure, un dithiolate, un mercaptan, un thiocarbonate, un composé ayant un ou plusieurs atomes d'azote ou un silane de formule générale (V)
SiRₐL_{c}X_{b} (V)
dans laquelle les radicaux R, L et X sont identiques ou différents et ont la signification suivante :
R = alkyle, alcényle, aryle, alkylaryle ou arylalkyle, ces radicaux pouvant être interrompus par des atomes de soufre ou des groupes -NH,
L = alkyle, alcényle, aryle, alkylaryle ou arylalkyle avec un ou plusieurs groupes phosphane, mercapto ou amino primaire et/ou -secondaire,
X = hydrogène, halogène, hydroxy, alcoxy, acyloxy, alkylcarbonyle, alcoxycarbonyle ou NR'₂, avec R' = hydrogène, alkyle ou aryle,
a = 0, 1, 2 ou 3,
b = 0, 1, 2 ou 3,
c = 1, 2, 3 ou 4, avec a+b+c = 4.

17. Procédé selon la revendication 15 ou 16,
caractérisé en ce qu'
on utilise comme particules de l'échelle du nanomètre sont des sulfures et/ou sélénures et/ou tellurures des métaux de transition, de préférence du tungstène.

18. Procédé selon une ou plusieurs des revendications 15 à 17,
caractérisé en ce qu'
on utilise comme autres composés de silicium (pré)condensés par hydrolyse un ou plusieurs composés qui dérivent de composés du silicium de formule générale II, le cas échéant sous une forme précondensée,
Rₐ(R"Z')_{b}SiX_{4-(a+b)} (II)
dans laquelle les radicaux et les indices ont la signification suivante :
R = alkyle, alcényle, aryle, alkylaryle ou arylalkyle,
R" = alkylène ou alcénylène, ces radicaux pouvant être interrompus par des atomes d'oxygène ou de soufre des groupes -NH,
X = hydrogène, halogène, hydroxy, alcoxy, acyloxy, alkylcarbonyle, aloxycarbonyle ou NR'₂,
avec R' = hydrogène, alkyle ou aryle,
Z' = halogène ou un groupe amino, amide, aldéhyde, alkylcarbonyle, carboxy, mercapto, cyano, alcoxy, alcoxycarbonyle, acide sulfonique, acide phosphorique, acryloxy, méthacryloxy, époxy ou vinyle éventuellement substitué,
a = 0, 1, 2 ou 3,
b = 0, 1, 2 ou 3, avec a+ b = 1, 2 ou 3.

19. Procédé selon l'une ou plusieurs des revendications 15 à 18,
caractérisé en ce qu'
on utilise comme autre composé du silicium (pré)condensé par hydrolyse un ou plusieurs composés qui dérivent de composés du silicium de formule générale III, éventuellement sous forme précondensée,
{XₙRₖSi[(R²A)ₗ]₄₋₍ₙ₊ₖ₎}ₓB (III)
dans laquelle les radicaux et les indices ont la signification suivante :
A = O, S, PR', POR', NHC(O)O ou NHC(O)NR',
avec R' = hydrogène, alkyle ou aryle,
B = radical organique à chaîne droite ou ramifiée, qui dérive d'un composé B' avec au moins un (pour l = 1 et A = NHC(O)O ou NHC(O)NR') ou selon les cas au moins deux doubles liaisons C=C et de 5 à 50 atomes de carbone, avec R' = hydrogène, alkyle ou aryle,
R = alkyle, alcényle, aryle, alkylaryle ou arylalkyle,
R² = alkylène, alkylène ou alkylène arylène,
X = hydrogène, halogène, hydroxy, alcoxy, acyloxy, alkylcarbonyle, alcoxycarbonyle ou NR'₂,
avec R' = hydrogène, alkyle ou aryle,
n = 1, 2 ou 3,
k = 0, 1 ou 2,
l = 0 ou 1,
x = un nombre entier, dont la valeur maximale correspond au nombre de doubles liaisons dans le composé B' moins 1, ou selon les cas est égal au nombre de doubles liaisons dans le composé B', lorsque l = 1 et A représente NHC(O)O ou NHC(O)NR.

20. Procédé selon un ou plusieurs des revendications 15 à 19,
caractérisé en ce qu'
on utilise comme autres composés du silicium (pré)condensables par hydrolyse, un ou plusieurs composés de formule générale IV, éventuellement sous forme précondensée,
YₙSiXₗₘR₄₋₍ₙ₊ₘ₎ (IV)
dans laquelle les radicaux X, Y et R sont identiques ou différents et ont la signification suivante :
R = alkyle, alcényle, aryle, alkylaryle ou arylalkyle,
X = hydrogène, halogène, hydroxy, alcoxy, acyloxy, alkylcarbonyle, alcoxycarbonyle ou NR'₂,
avec R' = hydrogène, alkyle ou aryle,
Y = un substituant, qui contient un radical 1,4,6-trioxaspiro-[4,4]-nonane substitué ou non substitué,
n = 1, 2 ou 3,
m = 1, 2 ou 3 avec n+m ≤ 4.

21. Procédé selon une ou plusieurs des revendications 15 à 20,
caractérisé en ce qu'
on utilise comme autres composés condensables par hydrolyse un ou plusieurs composés qui dérivent de composés d'aluminium, de zirconium ou de titane de formule générale
AlR°₃ ou MX_{y}R_{z}
dans laquelle M représente le titane ou le zirconium, les radicaux R, R° et X sont identiques ou différents, R° représente un halogène, hydroxy, alcoxy ou acyloxy, y est un nombre entier de 1 à 4, en particulier de 2 à 4, z vaut 0, 1, 2 ou 3, de préférence 0, 1 ou 2, et X et R sont définis comme dans le cas de la formule générale I.

22. Procédé selon une ou plusieurs des revendications 15 à 21,
caractérisé en ce qu'
avant le formage on ajoute des monomères et/ou oligomères organiques et/ou d'autres additifs.

23. Utilisation des matériaux fluorescents selon une ou plusieurs des revendications 1 à 14 pour la production de revêtements, d'articles moulés, de fibres ou de feuilles.

24. Utilisation des matériaux fluorescents selon une ou plusieurs des revendications 1 à 14 pour la fabrication de pièces pour la photonique ou pour les systèmes optiques.
